# EUROPEAN PATENT SPECIFICATION

(11) **EP 4 328 256 B1**
(45) Date of publication and mention of the grant of the patent: **08.10.2025**
(21) Application number: 22791826.5
(22) Date of filing: 22.04.2022
(51) Int. Cl.: C08G 65/336, C09K 3/18, C07F 7/18, C08G 65/00, C09D 5/16, C09D 171/00

(54) **SURFACE TREATMENT AGENT**
OBERFLÄCHENBEHANDLUNGSMITTEL
AGENT DE TRAITEMENT DE SURFACE

(30) Priority: 23.04.2021 JP 2021073185
(43) Date of publication of application: 28.02.2024
(73) Proprietor: DAIKIN INDUSTRIES, LTD., Osaka-Shi, Osaka 530-0001 (JP)
(72) Inventor: YAMASHITA, Tsuneo, Osaka-shi, Osaka 530-0001 (JP); WATANABE, Yusuke, Osaka-shi, Osaka 530-0001 (JP); GOTO, Akihiro, Osaka-shi, Osaka 530-0001 (JP); OZAWA, Kaori, Osaka-shi, Osaka 530-0001 (JP); MITSUHASHI, Hisashi, Osaka-shi, Osaka 530-0001 (JP); KUBOTA, Hiroki, Osaka-shi, Osaka 530-0001 (JP)
(74) Representative: Hoffmann Eitle
(86) International application number: PCT/JP2022/018607
(87) International publication number: WO 2022/225055

(56) References cited:
- WO-A1-2009/008380
- WO-A1-2020/111008
- JP-A- 2020 164 848
- JP-A- 2021 109 385
- KR-A- 20150 054 147

## Description

### Technical Field

The present disclosure relates to a novel fluoropolyether group-containing silane compound and a surface-treating agent containing such a compound.

### Background Art

Certain types of fluoropolyether group-containing silane compounds are known to be capable of providing excellent water-repellency, oil-repellency, antifouling properties, and the like when used in surface treatment of a substrate. A layer obtained from a surface-treating agent containing a fluoropolyether group-containing silane compound (hereinafter, also referred to as a "surface-treating layer") is applied as a so-called functional thin film to a large variety of substrates such as glass, plastics, fibers, sanitary articles, and building materials (JP-A-2014-218639).

WO 2020/111008 describes fluoropolyether group-containing silane compounds which can form a surface layer having abrasion resistance and fingerprint stain removing property even when the chain length of a fluorine-containing organic group is shortened, and composition, coating liquids, and articles having a surface layer comprising the same.

JP-A-2020-164848 discloses fluoropolyether group-containing compounds of specified general formulae (1) and (2) which are suitable for forming a cured film having excellent friction durability.

WO 2009/008380 and KR-A-2015-0054147 relate to a surface treatment agents for forming coating films having water/oil repellency and oil/fouling stain removability, which comprise a specified fluorine-containing ether silane compound (A).

### Summary of Invention

### Technical Problem

The fluoropolyether group-containing silane compound described in JP-A-2014-218639 can provide a surface-treating layer having an excellent function, but a surface-treating layer having higher durability is required.

An object of the present disclosure is to provide a fluoropolyether group-containing compound capable of forming a surface-treating layer having higher durability or, in particular, abrasion durability.

### Solution to Problem

The present provides a fluoropolyether group-containing silane compound (also referred to as "the present compound" herein) of formula (1) or (2):

Rf¹-R^{F}-O_{q}-X^{A}-C(=O)-N(R¹)-X^{B}-R^{Si} (1)

R^{Si}-X^{B}-N(R¹)-C(=O)-X^{A}-Rf²ₚ-R^{F}-O_{q}-X^{A}-C(=O) -N (R¹)-X^{B}-R^{Si} (2)

wherein, each independently at each occurrence,
- Rf¹: is C₁₋₁₆-alkyl optionally substituted with F;
- Rf²: is C₁₋₆-alkylene optionally substituted with F;
- R^{F}: is a divalent fluoropolyether group;
- p: is 0 or 1;
- q: is 0 or 1;
- R¹: is C₁₋₁₆-alkyl optionally substituted with F;
- R^{Si}: is a monovalent group containing a Si atom to which OH or a hydrolyzable group selected from -OR^{j}, -OCOR^{j}, -O-N=CR^{j}₂, -NR^{j}₂, -NHR^{j}, and halogen (wherein R^{j} is optionally substituted C₁₋₄-alkyl) is bonded;
- X^{A}: is a single bond or - (X⁵¹)ₚ₅-
X⁵¹ is a group selected from -O-, -S-, an o-, m- or p-phenylene group, -C(O)O-, -OC(O)-, -Si(R⁵³)₂-, - (Si (R⁵³)₂O)ₘ₅-Si(R⁵³)₂-, -CONR⁵⁴-, -NR⁵⁴CO-, -O-CONR⁵⁴-, -NR⁵⁴CO-O-, -NR⁵⁴-, and - (CH₂)ₙ₅-,
R⁵³ is phenyl, C₁₋₆-alkyl, or C₁₋₆-alkoxy,
R⁵⁴ is H, phenyl, or C₁₋₆-alkyl,
m5 is an integer of 1-100,
n5 is an integer of 1-20, and
p5 is an integer of 1-10; and
- X^{B}: is a single bond or -(X⁶¹)ₚ₆-
X⁶¹ is a group selected from -O-, -S-, an o-, m- or p-phenylene group, -C(O)O-, -OC(O)-, -Si(R⁶³)₂-, - (Si(R⁶³)₂O)ₘ₆-Si(R⁶³)₂-, -CONR⁶⁴-, -NR⁶⁴CO-, -O-CONR⁶⁴-, -NR⁶⁴CO-O-, -NR⁶⁴-, and -(CH₂)ₙ₆-,
R⁶³ is phenyl, C₁₋₆-alkyl, or C₁₋₆-alkoxy,
R⁶⁴ is H, phenyl, or C₁₋₆-alkyl,
m6 is an integer of 1-100,
n6 is an integer of 1-20, and
p6 is an integer of 1-10.

Also, the present invention provides (i) a surface treating agent ((also referred to as "the present surface treating agent" herein) comprising the present compound, and (ii) the use of this surface-treating agent as an antifouling coating agent or a water-proof coating agent.

Furthermore, the present invention provides article comprising a substrate and, on a surface thereof, a layer formed of the present compound or the present surface-treating agent.

Preferred embodiments of the invention are as disclosed in the appended dependent claims and/or in the following detailed description.

### Advantageous Effect of Invention

The present disclosure can provide a fluoropolyether group-containing silane compound capable of forming a surface-treating layer having higher abrasion durability.

### Description of Embodiments

The term "monovalent organic group", as used herein, refers to a monovalent group containing carbon. The monovalent organic group is not limited, and may be a hydrocarbon group or a derivative thereof. The derivative of the hydrocarbon group refers to a group that has one or more of N, O, S, Si, amide, sulfonyl, siloxane, carbonyl, carbonyloxy, and the like at the terminal or in the molecular chain of the hydrocarbon group. The term simply referred to as an "organic group" means a monovalent organic group. The term "divalent organic group" refers to a divalent group containing carbon. The divalent organic group may be, but is not limited to, a divalent group obtained by further removing one hydrogen atom from an organic group.

The term "hydrocarbon group", as used herein, refers to a group that contains carbon and hydrogen and that is obtained by removing one hydrogen atom from a hydrocarbon. The hydrocarbon group is not limited, and examples include a C₁₋₂₀ hydrocarbon group optionally substituted with one or more substituents, such as an aliphatic hydrocarbon group and an aromatic hydrocarbon group. The "aliphatic hydrocarbon group" may be either linear, branched, or cyclic, and may be either saturated or unsaturated. The hydrocarbon group may contain one or more ring structures.

The substituent of the "hydrocarbon group", as used herein, is not limited, and examples include one or more groups selected from a halogen atom, and a C₁₋₆ alkyl group, a C₂₋₆ alkenyl group, a C₂₋₆ alkynyl group, a C₃₋₁₀ cycloalkyl group, a C₃₋₁₀ unsaturated cycloalkyl group, a 5 to 10-membered heterocyclyl group, a 5 to 10-membered unsaturated heterocyclyl group, a C₆₋₁₀ aryl group, and a 5 to 10-membered heteroaryl group each optionally substituted with one or more halogen atoms.

The "hydrolyzable group", as used herein, refers to a group capable of undergoing a hydrolysis reaction, i.e., refers to a group that can be eliminated from the main backbone of a compound by a hydrolysis reaction, and is a group selected from -OR^{j}, -OCOR^{j}, -O-N=CR^{j}₂, -NR^{j}₂, -NHR^{j}, and halogen, wherein Rⁱ is optionally substituted C₁₋₄-alkyl).

### (Fluoropolyether group-containing silane compound)

The present compound is a fluoropolyether group-containing silane compound of formula (1) or (2):

Rf¹-R^{F}-O_{q}-X^{A}-C(=O)-N(R¹)-X^{B}-R^{Si} (1)

R^{Si}-X^{B}-N(R¹)-C(=O)-X^{A}-Rf²ₚ-R^{F}-O_{q}-X^{A}-C(=O) -N (R¹)-X^{B}-R^{Si} (2)

wherein, each independently at each occurrence,
- Rf¹: is C₁₋₁₆-alkyl optionally substituted with F;
- Rf²: is C₁₋₆-alkylene optionally substituted with F;
- R^{F}: is a divalent fluoropolyether group;
- p: is 0 or 1;
- q: is 0 or 1;
- R¹: is C₁₋₁₆-alkyl optionally substituted with F;
- R^{Si}: is a monovalent group containing a Si atom to which OH or a hydrolyzable group selected from -OR^{j}, -OCOR^{j}, -O-N=CR^{j}₂, -NR^{j}₂, -NHR^{j}, and halogen (wherein R^{j} is optionally substituted C₁₋₄-alkyl) is bonded;
- X^{A}: is a single bond or - (X⁵¹)ₚ₅-
X⁵¹ is a group selected from -O-, -S-, an o-, m- or p-phenylene group, -C(O)O-, -OC(O)-, -Si(R⁵³)₂-, - (Si (R⁵³)₂O)ₘ₅-Si(R⁵³)₂-, -CONR⁵⁴-, -NR⁵⁴CO-, -O-CONR⁵⁴-, -NR⁵⁴CO-O-, -NR⁵⁴-, and - (CH₂)ₙ₅-,
R⁵³ is phenyl, C₁₋₆-alkyl, or C₁₋₆-alkoxy,
R⁵⁴ is H, phenyl, or C₁₋₆-alkyl,
m5 is an integer of 1-100,
n5 is an integer of 1-20, and
p5 is an integer of 1-10; and
- X^{B}: is a single bond or -(X⁶¹)ₚ₆-
X⁶¹ is a group selected from -O-, -S-, an o-, m- or p-phenylene group, -C(O)O-, -OC(O)-, -Si(R⁶³)₂-, - (Si(R⁶³)₂O)ₘ₆-Si(R⁶³)₂-, -CONR⁶⁴-, -NR⁶⁴CO-, -O-CONR⁶⁴-, -NR⁶⁴CO-O-, -NR⁶⁴-, and -(CH₂)ₙ₆-,
R⁶³ is phenyl, C₁₋₆-alkyl, or C₁₋₆-alkoxy,
R⁶⁴ is H, phenyl, or C₁₋₆-alkyl,
m6 is an integer of 1-100,
n6 is an integer of 1-20, and
p6 is an integer of 1-10.

In the formula, Rf¹ is C₁₋₁₆-alkyl optionally substituted with one or more F. Therein, the "C₁₋₁₆-alkyl group" may be linear or branched, and is preferably linear or branched C₁₋₆-alkyl, in particular C₁₋₃-alkyl, and more preferably linear C₁₋₆-alkyl, in particular C₁₋₃-alkyl.

Rf¹ is preferably C₁₋₁₆-alkyl substituted with one or more F, more preferably CF₂H-(C₁₋₁₅-perfluoroalkylene), and even more preferably C₁₋₁₆-perfluoroalkyl.

The C₁₋₁₆-perfluoroalkyl group may be linear or branched, and is preferably linear or branched C₁₋₆-perfluoroalkyl, in particular C₁₋₃-perfluoroalkyl, more preferably linear C₁₋₆-perfluoroalkyl, in particular C₁₋₃-perfluoroalkyl, and specifically -CF₃, -CF₂CF₃, or -CF₂CF₂CF₃.

In the formula, Rf² is C₁₋₆-alkylene optionally substituted with one or more F. Therein, the "C₁₋₆-alkylene group" may be linear or branched, and is preferably linear or branched C₁₋₃-alkylene, and more preferably linear C₁₋₃-alkylene.

Rf² is preferably C₁₋₆-alkylene group substituted with one or more F, more preferably C₁₋₆-perfluoroalkylene, and even more preferably C₁₋₃-perfluoroalkylene.

The C₁₋₆ perfluoroalkylene group may be linear or branched, and is preferably linear or branched C₁₋₃-perfluoroalkylene, more preferably linear C₁₋₃-perfluoroalkyl, and specifically -CF₂-, -CF₂CF₂-, or -CF₂CF₂CF₂-.

In the formulae, p is 0 or 1. In one embodiment, p is 0. In another embodiment, p is 1.

In the formulae, q is each independently 0 or 1. In one embodiment, q is 0. In another embodiment, q is 1.

In formulae (1) and (2), R^{F} is each independently at each occurrence a divalent fluoropolyether group.

R^{F} is preferably a group of the formula:

-(OC₆F₁₂)ₐ-(OC₅F₁₀)_{b}-(OC₄F₈)_{c}-(OC₃R^{Fa}₆)_{d}-(OC₂F₄)ₑ-(OCF₂)_{f}-

wherein
R^{Fa} is each independently H, F or Cl, and a-f each independently are an integer of 0-200, with (a+b+c+d+e+f) being 1 or more, and the order of the repeating units in parentheses provided with a, b, c, d, e, or f is not limited, provided that when all R^{Fa} groups are H or Cl, at least one of a, b, c, e, and f is 1 or more.
R^{Fa} is preferably HH or F, and more preferably F. However, when all R^{Fa} groups are H or Cl, at least one of a, b, c, e, and f is 1 or more.

Preferably, a, b, c, d, e, and f may be each independently an integer of 0-100.

(a+b+c+d+e+f) is preferably 5 or more, and more preferably 10 or more, and may be, for example, 15 or more or 20 or more, and is preferably 200 or less, more preferably 100 or less, and even more preferably 60 or less, and may be, for example, 50 or less or 30 or less.

These repeating units may be linear or branched, and may include a ring structure. For example, -(OC₆F₁₂)- may be - (OCF₂CF₂CF₂CF₂CF₂CF₂)-, - (OCF(CF₃)CF₂CF₂CF₂CF₂)-, - (OCF₂CF(CF₃)CF₂CF₂CF₂)-, - (OCF₂CF₂CF(CF₃)CF₂CF₂)-, - (OCF₂CF₂CF₂CF(CF₃)CF₂)-, -(OCF₂CF₂CF₂CF₂CF(CF₃))-, or the like. - (OC₅F₁₀)- may be -(OCF₂CF₂CF₂CF₂CF₂)-, -(OCF(CF₃)CF₂CF₂CF₂)-, - (OCF₂CF(CF₃)CF₂CF₂)-, - (OCF₂CF₂CF(CF₃)CF₂)-, - (OCF₂CF₂CF₂CF(CF₃))-, or the like. -(OC₄F₈)- may be any of - (OCF₂CF₂CF₂CF₂)-, -(OCF(CF₃)CF₂CF₂)-, -(OCF₂CF(CF₃)CF₂)-, - (OCF₂CF₂CF(CF₃))-, - (OC (CF₃)₂CF₂)-, -(OCF₂C(CF₃)₂)-, - (OCF(CF₃)CF(CF₃))-, -(OCF(C₂F₅)CF₂)-, and -(OCF₂CF(C₂F₅))-. - (OC₃F₆)- (i.e., in the formula, R^{Fa} is a fluorine atom) may be any of -(OCF₂CF₂CF₂)-, -(OCF(CF₃)CF₂)-, and - (OCF₂CF(CF₃))-. -(OC₂F₄)- may be any of -(OCF₂CF₂)- and -(OCF(CF₃))-.

The ring structure may be the following three-, four-, five-, or six-membered ring, wherein * represents a bonding position.

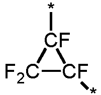

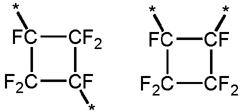

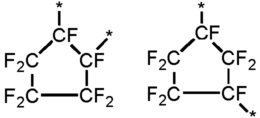

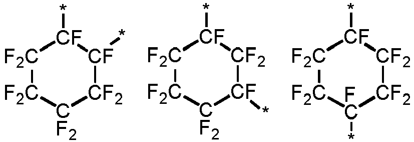

The ring structure may be preferably a four-, five-, or six-membered ring, and may be more preferably a four- or six-membered ring.

The repeating unit having a ring structure may be preferably the following unit, wherein * represents a bonding position:

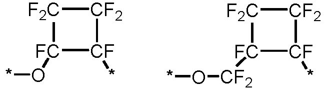

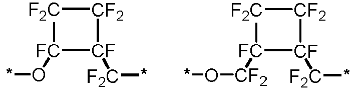

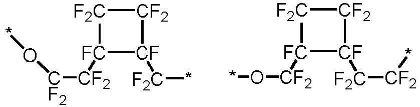

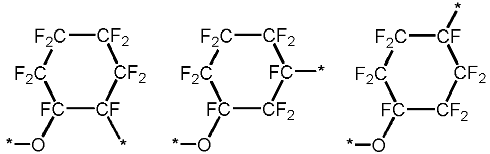

In one embodiment, the repeating unit is linear. When the repeating unit is linear, the surface lubricity, abrasion durability, and the like of the surface-treating layer can be increased.

In one embodiment, the repeating unit is branched. When the repeating unit is branched, the dynamic friction coefficient of the surface-treating layer can be increased.

In one embodiment, R^{F} is each independently at each occurrence a group of any of the following formulae (f1)-(f6) :

- (OC₃F₆)_{d}-(OC₃F₆)ₑ- (f1)

wherein d is an integer of 1-200, and e is 0 or 1 and preferably 1;

   -(OC₄F₈)_{c}-(OC₃F₆)_{d}-(OC₂F₄)ₑ-(OCF₂)_{f}- (f2)
wherein c and d are each independently an integer of 0-30,
e and f are each independently an integer of 1-200,
   (c+d+e+f) is 2 or more, and
   the order of the repeating units enclosed in parentheses provided with a subscript c, d, e, or f is not limited;

      -(R⁶-R⁷)_{g}- (f3)
wherein R⁶ is OCF₂ or OC₂F₄,
   R⁷ is a group selected from OC₂F₄, OC₃F₆, OC₄F₈, OC₅F₁₀, and OC₆F₁₂, or a combination of two or three groups independently selected from these groups, and
   g is an integer of 2-100;

      -(R⁶-R⁷)_{g}-R^{r}-(R^{7'}-R^{6'})_{g'}- (f4)
wherein R⁶ is OCF₂ or OC₂F₄,
   R⁷ is a group selected from OC₂F₄, OC₃F₆, OC₄F₈, OC₅F₁₀, and OC₆F₁₂, or a combination of two or three groups independently selected from these groups,
   R^{6'} is OCF₂ or OC₂F₄,
   R^{7'} is a group selected from OC₂F₄, OC₃F₆, OC₄F₈, OC₅F₁₀, and OC₆F₁₂, or a combination of two or three groups independently selected from these groups,
   g is an integer of 2-100,
   g' is an integer of 2-100, and
   R^{r} is 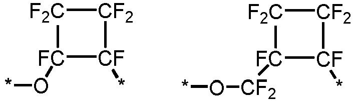 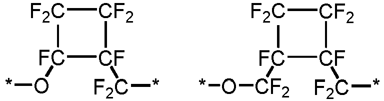 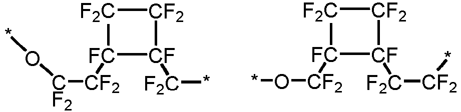 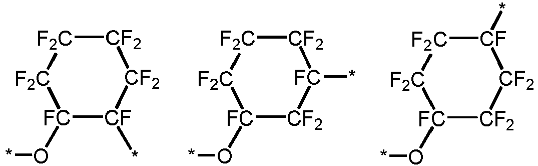
wherein * represents a bonding position;

   -(OC₆F₁₂)ₐ-(OC₅F₁₀)_{b}-(OC₄F₈)_{c}-(OC₃F₆)_{d}-(OC₂F₄)ₑ-(OCF₂)_{f}- (f5)
wherein e is an integer of 1-200, a, b, c, d, and f are each independently an integer of 0-200, and the order of the repeating units enclosed in parentheses provided with a, b, c, d, e, or f is not limited; and

   -(OC₆F₁₂)ₐ-(OC₅F₁₀)_{b}-(OC₄F₈)_{c}-(OC₃F₆)_{d}-(OC₂F₄)ₑ-(OCF₂)_{f}- (f6)
wherein f is an integer of 1-200, a, b, c, d, and e are each independently an integer of 0-200, and the order of the repeating units enclosed in parentheses provided with a, b, c, d, e, or f is not limited.

In formula (f1), d is preferably 5-200, more preferably 10-100, and even more preferably 15-50, and is, for example, an integer of 25-35. In one embodiment, e is 1. In another embodiment, e is 0. In formula (f1), -(OC₃F₆)_{d}- is preferably -(OCF₂CF₂CF₂)_{d}- or -(OCF(CF₃)CF₂)_{d}-, and is more preferably - (OCF₂CF₂CF₂)_{d}-.

In formula (f2), e and f are each independently an integer of preferably 5-200, and more preferably 10-200. (c+d+e+f) is preferably 5 or more, and more preferably 10 or more, and may be, for example, 15 or more or 20 or more. In one embodiment, formula (f2) is preferably -(OCF₂CF₂CF₂CF₂)_{c}-(OCF₂CF₂CF₂)_{d}-(OCF₂CF₂)ₑ-(OCF₂)_{f}-. In another embodiment, formula (f2) may be - (OC₂F₄) _{f}-(OCF₂)_{f}-.

In the formula (f3), R⁶ is preferably OC₂F₄. In formula (f3), R⁷ is preferably OC₂F₄, OC₃F₆, or OC₄F₈, or a combination of two or three groups independently selected from these groups, and is more preferably OC₃F₆ or OC₄F₈. Examples of the combination of two or three groups independently selected from OC₂F₄, OC₃F₆, and OC₄F₈ include, -OC₂F₄OC₃F₆-, -OC₂F₄OC₄F₈-, -OC₃F₆OC₂F₄-, -OC₃F₆OC₃F₆-, -OC₃F₆OC₄F₈-, -OC₄F₈OC₄F₈-, - OC₄F₈OC₃F₆-, -OC₄F₈OC₂F₄-, -OC₂F₄OC₂F₄OC₃F₆-, -OC₂F₄OC₂F₄OC₄F₈-, - OC₂F₄OC₃F₆OC₂F₄-, -OC₂F₄OC₃F₆OC₃F₆-, -OC₂F₄OC₄F_{B}OC₂F₄-, - OC₃F₆OC₂F₄OC₂F₄-, -OC₃F₆OC₂F₄OC₃F₆-, -OC₃F₆OC₃F₆OC₂F₄-, and - OC₄F₈OC₂F₄OC₂F₄-. In the formula (f3), g is an integer of preferably 3 or more, and more preferably 5 or more. g is preferably an integer of 50 or less. In formula (f3), OC₂F₄, OC₃F₆, OC₄F₈, OC₅F₁₀, and OC₆F₁₂ may be either linear or branched, and are preferably linear. In this embodiment, formula (f3) is preferably -(OC₂F₄-OC₃F₆)_{g}- or -(OC₂F₄-OC₄F₈)_{g}-.

In formula (f4), R⁶, R⁷, and g have the same meanings, and have the same embodiments, as those in formula (f3). R^{6'}, R^{7'}, and g' have the same meanings, and have the same embodiments, as R⁶, R⁷, and g of formula (f3), respectively. R^{r} is preferably 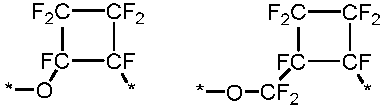 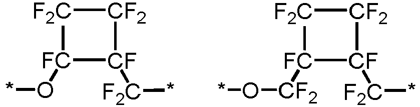 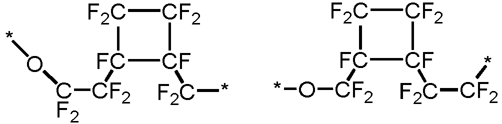 and more preferably 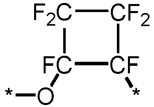 wherein * represents a bonding position.

In formula (f5), e is an integer of preferably 1-100, and more preferably 5-100. (a+b+c+d+e+f) is preferably 5 or more, and more preferably 10 or more, and is, for example, 10-100.

In formula (f6), f is an integer of preferably 1-100, and more preferably 5-100. (a+b+c+d+e+f) is preferably 5 or more, and more preferably 10 or more, and is, for example, 10-100.

In one embodiment, R^{F} is a group of formula (f1) or (f2).

In one embodiment, R^{F} is a group of formula (f1).

In one embodiment, R^{F} is a group of formula (f2).

In one embodiment, R^{F} is a group of formula (f3) or (f4).

In one embodiment, R^{F} is a group of formula (f3).

In one embodiment, R^{F} is a group of formula (f4).

In one embodiment, R^{F} is a group of formula (f5).

In one embodiment, R^{F} is a group of formula (f6).

In R^{F}, the ratio of e to f (hereinafter, referred to as an "e/f ratio") is 0.1-10, preferably 0.2-5, more preferably 0.2-2, even more preferably 0.2-1.5, and yet more preferably 0.2-0.85. With an e/f ratio of 10 or less, the lubricity, abrasion durability, and chemical resistance (such as durability against artificial sweat) of a surface-treating layer obtained from the compound are further increased. The lower the e/f ratio is, the more increased the lubricity and abrasion durability of the surface-treating layer are. On the other hand, with an e/f ratio of 0.1 or more, the stability of the compound can be further increased. The higher the e/f ratio is, the greater the stability of the compound is.

In one embodiment, the e/f ratio is preferably 0.2-0.95, and more preferably 0.2-0.9.

In one embodiment, from the viewpoint of heat resistance, the e/f ratio is preferably 1.0 or more, and more preferably 1.0-2.0.

In the fluoropolyether group-containing silane compound, the number average molecular weight of the R^{F1} and R^{F2} moieties is, but is not limited to, for example, 500-30,000, preferably 1,500-30,000, and more preferably 2,000-10,000. Herein, the number average molecular weight of R^{F1} and R^{F2} is a value obtained by ¹⁹F-NMR measurement.

In another embodiment, the number average molecular weight of the R^{F1} and R^{F2} moieties is 500-30,000, preferably 1,000-20,000, more preferably 2,000-15,000, and yet more preferably 2,000-10,000, and may be, for example, 3,000-6,000.

In another embodiment, the number average molecular weight of the R^{F1} and R^{F2} moieties may be 4,000-30,000, preferably 5,000-10,000, and more preferably 6,000-10,000.

In the formulae (1) and (2), R¹ is each independently C₁₋₁₆-alkyl optionally substituted with fluorine.

The C₁₋₁₆-alkyl group may be linear or branched, and is preferably linear.

In one embodiment, the alkyl group of R¹ has 3-16, preferably 4-15, and more preferably 8-12 carbon atoms. When the number of carbon atoms in the alkyl group of R¹ is within such a range, abrasion durability is further increased.

In one embodiment, the alkyl group of R¹ is unsubstituted alkyl. When the alkyl group of R¹ is unsubstituted alkyl, abrasion durability is further increased.

In one embodiment, the alkyl group of R¹ is fluorine-substituted alkyl. When the alkyl group of R¹ is fluorine-substituted alkyl, grime adherability is reduced, and removability by wiping is further improved.

The fluorine-substituted alkyl is preferably -R²-R³, wherein R² is C₁₋₆-alkylene and preferably C₂₋₄-alkylene, and R³ is C₁₋₁₀-perfluoroalkyl and preferably C₁₋₆-perfluoroalkyl. When the alkyl group of R¹ is -R²-R³, grime adherability is reduced, and removability by wiping is further improved.

In one preferable embodiment, R¹ is unsubstituted C₃₋₁₆-alkyl, preferably unsubstituted C₄₋₁₆-alkyl, and even more preferably unsubstituted C₈₋₁₂-alkyl.

In another preferable embodiment, R¹ is -R²-R³, R² is C₂₋₄-alkylene, and R³ is C₁₋₁₀-perfluoroalkyl.

In the formulae (1) and (2), R^{Si} is each independently at each occurrence a monovalent group containing a Si atom to which OH or a hydrolyzable group is bonded.

In a preferable embodiment, R^{Si} is a group formula (S1), (S2), (S3), (S4), or (S5):

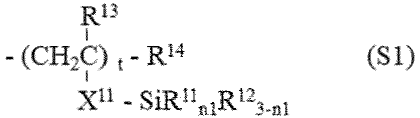

-**SiR¹¹ₙ₁R¹²₃₋ₙ₁** **(S2)**

**-SiR^{a1}ₖ₁R^{b1}ₗ₁R^{c1}ₘ₁** (S3)

-**CR^{d1}ₖ₂R^{e1}ₗ₂R^{f1}ₘ₂** **(S4)**

**- NR^{g1}R^{h1}** **(S5)**

In the formulae, R¹¹ is each independently at each occurrence OH or a hydrolyzable group, and preferably a hydrolyzable group.

The hydrolyzable group isselected from -OR^{j}, -OCOR^{j}, - O-N=CR^{j}₂, -NR^{j}₂, -NHR^{j}, or halogen, whereinRⁱ is optionally substituted C₁₋₄-alkyl), and preferably -ORⁱ (i.e., an alkoxy group). Examples of Rⁱ include unsubstituted alkyl such as methyl , ethyl, propyl, isopropyl -, - n-butyl, and isobutyl; and substituted alkyl such as chloromethyl. Among such groups, alkyl, in particular unsubstituted alkyl, is preferable, and methyl or ethyl is more preferable. In one embodiment, R^{j} is methyl, and in another embodiment, R^{j} is ethyl.

In the formulae, R¹² is each independently at each occurrence H or a monovalent organic group. The monovalent organic group is a monovalent organic group excluding the hydrolyzable group.

In R¹², the monovalent organic group is preferably C₁₋₂₀-alkyl, more preferably C₁₋₆-alkyl, and even more preferably methyl.

In the formulae, n1 is each independently an integer of 0-3 for each (SiR¹¹ₙ₁R¹²₃₋ₙ₁) unit. However, when R^{Si} is a group of formula (S1) or (S2), the R^{Si} moiety at the terminal of the formulae (1) and (2) (hereinafter, also referred to simply as a "terminal moiety" of the formulae (1) and (2)) has at least one (SiR¹¹ₙ₁R¹²₃₋ₙ₁) unit wherein n1 is 1-3. That is, in such terminal moieties, not all n1 are 0 at the same time. In other words, in the terminal moieties of the formula (1) and the formula (2), at least one Si atom to which OH or a hydrolyzable group is bonded is present.

n1 is each independently an integer of preferably 1-3, more preferably **2-3,** and even more preferably 3 for each (SiR¹¹ₙ₁R¹²₃₋ₙ₁) unit.

In the formulae, X¹¹ is each independently at each occurrence a single bond or a divalent organic group. The divalent organic group is preferably -R²⁸-Oₓ-R²⁹-, wherein R²⁸ and R²⁹ are each independently at each occurrence a single bond or C₁₋₂₀-alkylene, and x is 0 or 1. The C₁₋₂₀-alkylene may be linear or branched, and is preferably linear. The C₁₋₂₀-alkylene is preferably C₁₋₁₀-alkylene, more preferably C₁₋₆-alkylene, and even more preferably C₁₋₃-alkylene.

In one embodiment, X¹¹ is each independently at each occurrence -(C₁₋₆-alkylene)**-O-**(C₁₋₆-alkylene)- or -O**-**(C₁₋₆-alkylene)-.

In a preferable embodiment, X¹¹ is each independently at each occurrence a single bond or linear C₁₋₆-alkylene, preferably a single bond or linear C₁₋₃-alkylene, more preferably a single bond or linear C₁₋₂-alkylene, and even more preferably linear-C₁₋₂ alkylene.

In the formulae, R¹³ is each independently at each occurrence H or a monovalent organic group. The monovalent organic group is preferably C₁₋₂₀-alkyl. The C₁₋₂₀-alkyl may be linear or branched, and is preferably linear.

In a preferable embodiment, R¹³ is each independently at each occurrence H or linear C₁₋₆-alkyl, preferably H or linear C₁₋₃-alkyl, and preferably H or methyl.

In the formulae, t is each independently at each occurrence an integer of 2 or more.

In a preferable embodiment, t is each independently at each occurrence an integer of 2-10, and preferably an integer of 2-6.

In the formulae, R¹⁴ is each independently at each occurrence H, halogen, or -X¹¹-SiR¹¹ₙ₁R¹²₃₋ₙ₁. The halogen is preferably I, Cl or F, and more preferably F. In a preferable embodiment, R¹⁴ is H.

In the formulae, R¹⁵ is each independently at each occurrence a single bond, oxygen, C₁₋₆-alkylene, or C₁₋₆-alkyleneoxy.

In one embodiment, R¹⁵ is each independently at each occurrence oxygen, C₁₋₆-alkylene, or C₁₋₆-alkyleneoxy.

In a preferable embodiment, R¹⁵ is a single bond.

In one embodiment, the formula (S1) is the following formula (S1-a): 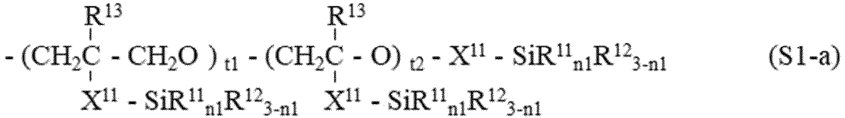 wherein
R¹¹, R¹², R¹³, X¹¹, and n1 have the same meanings as those described for the formula (S1);
t1 and t2 are each independently at each occurrence an integer of 1 or more, preferably an integer of 1-10, and more preferably an integer of 2-10, such as an integer of 1-5 or an integer of 2-5; and
the order of the repeating units enclosed in parentheses provided with t1 and t2 is not limited.

In a preferable embodiment, the formula (S1) is the following formula (S1-b): 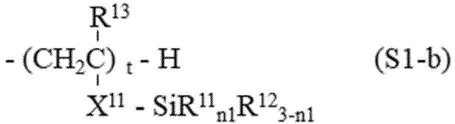 wherein R¹¹, R¹², R¹³, X¹¹, n1, and t have the same meanings as those described for the formula (S1).

In the formulae, R^{a1} is each independently at each occurrence -Z¹-SiR²¹ₚ₁R²²_{q1}R²³ᵣ₁.

Z¹ is each independently at each occurrence oxygen or a divalent organic group. The right side of the structure denoted as Z¹ below binds to (SiR²¹ₚ₁R²²_{q1}R²³ᵣ₁).

In a preferable embodiment, Z¹ is a divalent organic group.

In a preferable embodiment, Z¹ is not a group that forms a siloxane bond with the Si atom to which Z¹ binds. Preferably, in the formula (S3), (Si-Z¹-Si) does not contain a siloxane bond.

Z¹ is preferably a C₁₋₆ alkylene group, -(CH₂)₂₁-O-(CH₂)_{z2}-(wherein z1 is an integer of 0-6 such as an integer of 1-6, and z2 is an integer of 0-6 such as an integer of 1-6), or -(CH₂)_{z3}-phenylene-(CH₂)_{z4}- (wherein z3 is an integer of 0-6 such as an integer of 1-6, and z4 is an integer of 0-6 such as an integer of 1-6). The C₁₋₆ alkylene group may be linear or branched, and is preferably linear. These groups may be substituted with, for example, one or more substituents selected from F, C₁₋₆-alkyl, C₂₋₆-alkenyl, and C₂₋₆-alkynyl, and are preferably unsubstituted.

In a preferable embodiment, Z¹ is C₁₋₆-alkylene or - (CH₂)_{z3}-phenylene- (CH₂)_{z4}-, and preferably -phenylene-(CH₂)_{z4}-. When Z¹ is such a group, light resistance, in particular ultraviolet resistance, can be more increased.

In another preferable embodiment, Z¹ is C₁₋₃-alkylene. In one embodiment, Z¹ may be -CH₂CH₂CH₂-. In another embodiment, Z¹ may be -CH₂CH₂-.

R²¹ is each independently at each occurrence -Z^{1'}-SiR^{21'}_{p1'}R^{22'}_{q1'}R^{23'}_{r1'}.

Z^{1'} is each independently at each occurrence oxygen or a divalent organic group. The right side of the structure denoted as Z^{1'} below binds to (SiR^{21'}_{p1'}R^{22'}_{q1'}R^{23'}_{r1'}).

In a preferable embodiment, Z^{1'} is a divalent organic group.

In a preferable embodiment, Z^{1'} is not a group that forms a siloxane bond with the Si atom to which Z^{1'} binds. Preferably, in formula (S3), (Si-Z^{1'}-Si) does not contain a siloxane bond.

Z^{1'} is preferably C₁₋₆-alkylene, -(CH₂)_{z1'}-O-(CH₂)_{z2'}-(wherein z1' is an integer of 0-6 such as an integer of 1-6, and z2' is an integer of 0-6 such as an integer of 1-6), or -(CH₂)_{z3'}-phenylene-(CH₂)_{z4'}- (wherein z3' is an integer of 0-6 such as an integer of 1-6, z4' is an integer of 0-6 such as an integer of 1-6). The C₁₋₆-alkylene may be linear or branched, and is preferably linear. These groups may be substituted with, for example, one or more substituents selected from F, C₁₋₆-alkyl, C₂₋₆-alkenyl, and C₂₋₆-alkynyl, and are preferably unsubstituted.

In a preferable embodiment, Z^{1'} is C₁₋₆-alkylene or - (CH₂)_{z3'}-phenylene- (CH₂)_{z4'}-, and preferably -phenylene-(CH₂)_{z4'}-. When Z^{1'} is such a group, light resistance, in particular ultraviolet resistance, can be more increased.

In another preferable embodiment, Z^{1'} is C₁₋₃-alkylene. In one embodiment, Z^{1'} may be -CH₂CH₂CH₂-. In another embodiment, Z^{1'} may be -CH₂CH₂-.

R^{21'} is each independently at each occurrence -Z^{1"}-SiR^{22"}_{q1"}R^{23"}_{r1"}.

Z^{1"} is each independently at each occurrence oxygen or a divalent organic group. The right side of the structure denoted as Z^{1"} below binds to (SiR^{22"}_{q1"}R^{23"}_{r1"}).

In a preferable embodiment, Z^{1"} is a divalent organic group.

In a preferable embodiment, Z^{1"} is not a group that forms a siloxane bond with the Si atom to which Z^{1"} binds. Preferably, in the formula (S3), (Si-Z^{1"}-Si) does not contain a siloxane bond.

Z^{1"} is preferably C₁₋₆-alkylene, -(CH₂)_{z1"}-O-(CH₂)_{z2"}-(wherein z1" is an integer of 0-6 such as an integer of 1-6, and z2" is an integer of 0-6 such as an integer of 1-6), or -(CH₂)_{23"}-phenylene-(CH₂)_{z4"}-(wherein z3" is an integer of 0-6 such as an integer of 1-6, and z4" is an integer of 0-6 such as an integer of 1-6). The C₁₋₆ alkylene group may be linear or branched, and is preferably linear. These groups may be substituted with, for example, one or more substituents selected from F, C₁₋₆-alkyl, C₂₋₆-alkenyl, and C₂₋₆-alkynyl, and are preferably unsubstituted.

In a preferable embodiment, Z^{1"} is C₁₋₆-alkylene or - (CH₂)_{z3"}-phenylene-(CH₂)_{z4"}-, and preferably -phenylene-(CH₂)_{z4"}-. When Z^{1"} is such a group, light resistance, in particular ultraviolet resistance, can be more increased.

In another preferable embodiment, Z^{1"} is C₁₋₃-alkylene. In one embodiment, Z^{1"} may be -CH₂CH₂CH₂-. In another embodiment, Z^{1"} may be -CH₂CH₂-.

R^{22"} is each independently at each occurrence OH or a hydrolyzable group, and preferably a hydrolyzable group.

The hydrolyzable group is -OR^{j}, -OCOR^{j}, -O-N=CR^{j}₂, -NR^{j}₂, -NHR^{j}, or halogen, wherein R^{j} is optionally substituted C₁₋₄-alkyl), and more preferably -OR^{j} (i.e., alkoxy). Examples of R^{j} include unsubstituted alkyl such as methyl, ethyl, propyl, isopropyl, n-butyl, and isobutyl; and substituted alkyl such as chloromethyl. Among such groups, alkyl, in particular unsubstituted alkyl, is preferable, and methyl or ethyl is more preferable. In one embodiment, R^{j} is methyl, and in another embodiment, R^{j} is ethyl.

R^{23"} is each independently at each occurrence H or a monovalent organic group. The monovalent organic group is a monovalent organic group excluding the hydrolyzable group.

In R^{23"}, the monovalent organic group is preferably C₁₋₂₀-alkyl, more preferably C₁₋₆-alkyl, and even more preferably methyl.

q1" is each independently at each occurrence an integer of 0-3, and r1" is each independently at each occurrence an integer of 0-3. (q1"+r1") is 3 in the (SiR^{22"}_{q1"}R^{23"}_{r1"}) unit.

q1" is each independently an integer of preferably 1-3, more preferably 2-3, and even more preferably 3 for each (SiR^{22"}_{q1"}R^{23"}_{r1"}) unit.

R^{22'} is each independently at each occurrence OH or a hydrolyzable group, and preferably a hydrolyzable group. The hydrolyzable group is as defined for R^{22"} above.

R^{23'} is each independently at each occurrence H or a monovalent organic group. The monovalent organic group is a monovalent organic group excluding the hydrolyzable group.

In R^{23'}, the monovalent organic group is preferably C₁₋₂₀-alkyl, more preferably C₁₋₆-alkyl, and even more preferably methyl.

p1' is each independently at each occurrence an integer of 0-3, q1' is each independently at each occurrence an integer of 0-3, and r1' is each independently at each occurrence an integer of 0-3. (p'+q1'+r1') is 3 in the (SiR^{21'}_{p1'}R^{22'}_{q1'}R^{23'}_{r1'}) unit.

In one embodiment, p1' is 0.

In one embodiment, p1' may be each independently an integer of 1-3, an integer of 2-3, or 3 for each (SiR^{21'}_{p1'}R^{22'}_{q1'}R^{23'}_{r1'}) unit. In a preferable embodiment, p1' is 3.

In one embodiment, q1' is each independently an integer of 1-3, preferably an integer of 2-3, and more preferably 3 for each (SiR^{21'}_{p1'}R^{22'}_{q1'}R^{23'}_{r1'}) unit.

In one embodiment, p1' is 0, and q1' is each independently an integer of 1-3, preferably an integer of 2-3, and more preferably 3 for each (SiR^{21'}_{p1'}R^{22'}_{q1'}R^{23'}_{r1'}) unit.

R²² is each independently at each occurrence OH or a hydrolyzable group, and preferably a hydrolyzable group. The hydrolyzable group is as defined for R^{22"} above.

R²³ is each independently at each occurrence H or a monovalent organic group. The monovalent organic group is a monovalent organic group excluding the hydrolyzable group.

In R²³, the monovalent organic group is preferably C₁₋₂₀-alkyl, more preferably C₁₋₆-alkyl, and even more preferably methyl.

p1 is each independently at each occurrence an integer of 0-3, q1 is each independently at each occurrence an integer of 0-3, and r1 is each independently at each occurrence an integer of 0-3. (p1+q1+r1) is 3 in the (SiR²¹ₚ₁R²²_{q1}R²³ᵣ₁) unit.

In one embodiment, p1 is 0.

In one embodiment, p1 may be each independently an integer of 1-3, an integer of 2-3, or 3 for each (SiR²¹ₚ₁R²²_{q1}R²³ᵣ₁) unit. In a preferable embodiment, p1 is 3.

In one embodiment, q1 is each independently an integer of 1-3, preferably an integer of 2-3, and more preferably 3 for each (SiR²¹ₚ₁R²²_{q1}R²³ᵣ₁) unit.

In one embodiment, p1 is 0, and q1 is each independently an integer of 1-3, preferably an integer of 2-3, and even more preferably 3 for each (SiR²¹ₚ₁R²²_{q1}R²³ᵣ₁) unit.

In the formula, R^{b1} is each independently at each occurrence OH or a hydrolyzable group, and preferably a hydrolyzable group. The hydrolyzable group is as defined for R^{22"} above.

In the formula, R^{c1} is each independently at each occurrence H or a monovalent organic group. The monovalent organic group is a monovalent organic group excluding the hydrolyzable group.

In R^{c1}, the monovalent organic group is preferably C₁₋₂₀-alkyl, more preferably C₁₋₆-alkyl, and even more preferably methyl.

k1 is each independently at each occurrence an integer of 0-3, l1 is each independently at each occurrence an integer of 0-3, and m1 is each independently at each occurrence an integer of 0-3. (k1+l1+m1) is 3 in the (SiR^{a1}ₖ₁R^{b1}ₗ₁R^{c1}ₘ₁) unit.

In one embodiment, k1 is each independently an integer of 1-3, preferably 2 or 3, and more preferably 3 for each (SiR^{a1}ₖ₁R^{b1}ₗ₁R^{c1}ₘ₁) unit. In a preferable embodiment, k1 is 3.

In the formulae (1) and (2), when R^{Si} is a group represented by the formula (S3), preferably, at least two Si atoms to which OH or a hydrolyzable group is bonded are present in the terminal moieties of the formulae (1) and (2).

In a preferable embodiment, the group of formula (S3) has any one of -Z¹-SiR²²_{q1}R²³ᵣ₁ (wherein q1 is an integer of 1-3, preferably 2 or 3, and more preferably 3, and r1 is an integer of 0-2), -Z^{1'}-SiR^{22'}_{q1'}R^{23'}_{r1'} (wherein q1' is an integer of 1-3, preferably 2 or 3, and more preferably 3, and r1' is an integer of 0-2), or -Z^{1"}-SiR^{22"}_{q1"}R^{23"}_{r1"} (wherein q1" is an integer of 1-3, preferably 2 or 3, and more preferably 3, and r1" is an integer of 0-2). Z¹, Z^{1'}, Z^{1"}, R²², R²³, R^{22'}, R^{23'}, R^{22"}, and R^{23"} have the same meanings as those described above.

In a preferable embodiment, when R^{21'} is present in formula (S3), q1" is an integer of 1-3, preferably 2 or 3, and more preferably 3 in at least one and preferably all R^{21'} groups.

In a preferable embodiment, when R²¹ is present in formula (S3), p1' is 0, and q1' is an integer of 1-3, preferably 2 or 3, and more preferably 3 in at least one and preferably all R²¹ groups.

In a preferable embodiment, when R^{a1} is present in formula (S3), p1 is 0, and q1 is an integer of 1-3, preferably 2 or 3, and more preferably 3 in at least one and preferably all R^{a1} groups.

In a preferable embodiment, in formula (S3), k1 is 2 or 3 and preferably 3, p1 is 0, q1 is 2 or 3 and preferably 3.

R^{d1} is each independently at each occurrence -Z²-CR³¹ₚ₂R³²_{q2}R³³ᵣ₂.

Z² is each independently at each occurrence a single bond, oxygen, or a divalent organic group. The right side of the structure denoted as Z² below binds to (CR³¹ₚ₂R³²_{q2}R³³ᵣ₂).

In a preferable embodiment, Z² is a divalent organic group.

Z² is preferably a C₁₋₆ alkylene group, -(CH₂)_{z5}-O-(CH₂)_{z6}-(wherein z5 is an integer of 0-6 such as an integer of 1-6, and z6 is an integer of 0-6 such as an integer of 1-6), or -(CH₂)_{z7}-phenylene-(CH₂)_{z8}- (wherein z7 is an integer of 0-6 such as an integer of 1-6, and z8 is an integer of 0-6 such as an integer of 1-6). The C₁₋₆-alkylene may be linear or branched, and is preferably linear. These groups may be substituted with, for example, one or more substituents selected from F, C₁₋₆-alkyl, C₂₋₆-alkenyl, and C₂₋₆-alkynyl, and are preferably unsubstituted.

In a preferable embodiment, Z² is C₁₋₆-alkylene or - (CH₂)_{z7}-phenylene- (CH₂)_{z8}-, and preferably -phenylene- (CH₂)_{z8}-. When Z² is such a group, light resistance, in particular ultraviolet resistance, can be more increased.

In another preferable embodiment, Z² is C₁₋₃-alkylene. In one embodiment, Z² may be -CH₂CH₂CH₂-. In another embodiment, Z² may be -CH₂CH₂-.

R³¹ is each independently at each occurrence -Z^{2'}-CR^{32'}_{q2'}R^{33'}_{r2'}.

Z^{2'} is each independently at each occurrence a single bond, oxygen, or a divalent organic group. The right side of the structure denoted as Z^{2'} below binds to (CR^{32'}_{q2'}R^{33'}_{r2'}).

Z^{2'} is preferably C₁₋₆-alkylene, - (CH₂)_{z5'}-O-(CH₂)_{z6'}-(wherein z5' is an integer of 0-6 such as an integer of 1-6, and z6' is an integer of 0-6 such as an integer of 1-6), or -(CH₂)_{z7'}-phenylene-(CH₂)_{z8'}- (wherein z7' is an integer of 0-6 such as an integer of 1-6, and z8' is an integer of 0-6 such as an integer of 1-6). The C₁₋₆ alkylene group may be linear or branched, and is preferably linear. These groups may be substituted with, for example, one or more substituents selected from F, C₁₋₆-alkyl, C₂₋₆-alkenyl, and C₂₋₆-alkynyl, and are preferably unsubstituted.

In a preferable embodiment, Z^{2'} is C₁₋₆-alkylene or - (CH₂)_{z7'}-phenylene-(CH₂)_{z8'}-, and preferably -phenylene-(CH₂)_{z8'}-. When Z^{2'} is such a group, light resistance, in particular ultraviolet resistance, can be more increased.

In another preferable embodiment, Z^{2'} is C₁₋₃-alkylene. In one embodiment, Z^{2'} may be -CH₂CH₂CH₂-. In another embodiment, Z^{2'} may be -CH₂CH₂-.

R^{32'} is each independently at each occurrence -Z³-SiR³⁴ₙ₂R³⁵₃₋ₙ₂.

Z³ is each independently at each occurrence a single bond, oxygen, or a divalent organic group. The right side of the structure denoted as Z³ below binds to (SiR³⁴ₙ₂R³⁵₃₋ₙ₂).

In one embodiment, Z³ is oxygen.

In one embodiment, Z³ is a divalent organic group.

Z³ is preferably C₁₋₆-alkylene, -(CH₂)_{z5"}-O-(CH₂)_{z6"}-(wherein z5" is an integer of 0-6 such as an integer of 1-6, and z6" is an integer of 0-6 such as an integer of 1-6), or -(CH₂)_{z7"}-phenylene-(CH₂)_{z8"}- (wherein z7" is an integer of 0-6 such as an integer of 1-6, and z8" is an integer of 0-6 such as an integer of 1-6). The C₁₋₆ alkylene group may be linear or branched, and is preferably linear. These groups may be substituted with, for example, one or more substituents selected from F, C₁₋₆-alkyl, C₂₋₆-alkenyl, and C₂₋₆-alkynyl, and are preferably unsubstituted.

In a preferable embodiment, Z³ is C₁₋₆-alkylene or - (CH₂)_{z7"}-phenylene-(CH₂)_{z8"}-, and preferably -phenylene-(CH₂)_{z8"}-. When Z³ is such a group, light resistance, in particular ultraviolet resistance, can be more increased.

In another preferable embodiment, Z³ is C₁₋₃-alkylene. In one embodiment, Z³ may be -CH₂CH₂CH₂-. In another embodiment, Z³ may be -CH₂CH₂-.

R³⁴ is each independently at each occurrence OH or a hydrolyzable group, and preferably a hydrolyzable group. The hydrolyzable group is as defined for R^{22"} above.

R³⁵ is each independently at each occurrence H or a monovalent organic group. The monovalent organic group is a monovalent organic group excluding the hydrolyzable group.

In R³⁵, the monovalent organic group is preferably C₁₋₂₀-alkyl, more preferably C₁₋₆-alkyl, and even more preferably methyl.

In the formula, n2 is each independently an integer of 0-3 for each (SiR³⁴ₙ₂R³⁵₃₋ₙ₂) unit. However, when R^{Si} is a group of formula (S4), the terminal moieties of the formulae (1) and (2) have at least one (SiR³⁴ₙ₂R³⁵₃₋ₙ₂) unit wherein n2 is 1-3. That is, in such terminal moieties, not all n2 are 0 at the same time. In other words, in the terminal moieties of the formula (1) and the formula (2), at least one Si atom to which OH or a hydrolyzable group is bonded is present.

n2 is each independently an integer of preferably 1-3, more preferably 2-3, and even more preferably 3 for each (SiR³⁴₂R³⁵₃₋ₙ₂) unit.

R^{33'} is each independently at each occurrence H, OH, or a monovalent organic group. The monovalent organic group is a monovalent organic group excluding the hydrolyzable group.

The monovalent organic group of R^{33'} is preferably C₁₋₂₀-alkyl or - (CₛH₂ₛ)t₁-(O-CₛH₂ₛ)t₂ (wherein s is an integer of 1-6 and preferably an integer of 2-4, t1 is 1 or 0 and preferably 0, t2 is an integer of 1-20, preferably an integer of 2-10, and more preferably an integer from 2-6), more preferably C₁₋₂₀-alkyl, even more preferably C₁₋₆-alkyl, and particularly preferably methyl.

In one embodiment, R^{33'} is OH.

In another embodiment, the monovalent organic group of R^{33'} is preferably C₁₋₂₀-alkyl, and more preferably C₁₋₆-alkyl.

q2' is each independently at each occurrence an integer of 0-3, and r2' is each independently at each occurrence an integer of 0-3. (q2'+r2') is 3 in the (CR^{32'}_{q2'}R^{33'}_{r2'}) unit.

q2' is each independently an integer of preferably 1-3, more preferably 2-3, and even more preferably 3 for each (CR^{32'}_{q2'}R^{33'}_{r2'}) unit.

R³² is each independently at each occurrence -Z³-SiR³⁴ₙ₂R³⁵₃₋ₙ₂. -Z³-SiR³⁴ₙ₂R³⁵₃₋ₙ₂ has the same meanings as those described for R^{32'}.

R³³ is each independently at each occurrence H, OH, or a monovalent organic group. The monovalent organic group is a monovalent organic group excluding the hydrolyzable group.

The monovalent organic group of R³³ is preferably C₁₋₂₀-alkyl or - (CₛH₂ₛ)t₁-(O-CₛH₂ₛ)t₂ (wherein s is an integer of 1-6 and preferably an integer of 2-4, t1 is 1 or 0 and preferably 0, t2 is an integer of 1-20, preferably an integer of 2-10, and more preferably an integer from 2-6), more preferably C₁₋₂₀-alkyl, even more preferably C₁₋₆-alkyl, and particularly preferably methyl.

In one embodiment, R³³ is OH.

In another embodiment, the monovalent organic group of R³³ is preferably C₁₋₂₀-alkyl, and more preferably C₁₋₆-alkyl.

p2 is each independently at each occurrence an integer of 0-3, q2 is each independently at each occurrence an integer of 0-3, and r2 is each independently at each occurrence an integer of 0-3. (p2+q2+r2) is 3 in the (CR³¹ₚ₂R³²_{q2}R³³ᵣ₂) unit.

In one embodiment, p2 is 0.

In one embodiment, p2 may be each independently an integer of 1-3, an integer of 2-3, or 3 for each (CR³¹ₚ₂R³²_{q2}R³³ᵣ₂) unit. In a preferable embodiment, p2 is 3.

In one embodiment, q2 is each independently an integer of 1-3, preferably an integer of 2-3, and more preferably 3 for each (CR³¹ₚ₂R³²_{q2}R³³ᵣ₂) unit.

In one embodiment, p2 is 0, and q2 is each independently an integer of 1-3, preferably an integer of 2-3, and even more preferably 3 for each (CR³¹ₚ₂R³²_{q2}R³³ᵣ₂) unit.

R^{e1} is each independently at each occurrence -Z³-SiR³⁴ₙ₂R³⁵₃₋ₙ₂. -Z³-SiR³⁴ₙ₂R³⁵₃₋ₙ₂ has the same meanings as those described for R³²'.

R^{f1} is each independently at each occurrence H, OH, or a monovalent organic group. The monovalent organic group is a monovalent organic group excluding the hydrolyzable group.

The monovalent organic group of R^{f1} is preferably a C₁₋₂₀ alkyl group or - (CₛH₂ₛ)ₜ₁-(O-CₛH₂ₛ)ₜ₂ (wherein s is an integer of 1-6 and preferably an integer of 2-4, t1 is 1 or 0 and preferably 0, t2 is an integer of 1-20, preferably an integer of 2-10, and more preferably an integer from 2-6), more preferably C₁₋₂₀-alkyl, even more preferably C₁₋₆-alkyl, and particularly preferably methyl.

In one embodiment, R^{f1} is OH.

In another embodiment, R^{f1} is a monovalent organic group, preferably C₁₋₂₀-alkyl, and more preferably C₁₋₆-alkyl group.

k2 is each independently at each occurrence an integer of 0-3, l2 is each independently at each occurrence an integer of 0-3, and m2 is each independently at each occurrence an integer of 0-3. The sum of k2, l2, and m2 is 3 in the (CR^{d1}ₖ₂R^{e1}ₗ₂R^{f1}ₘ₂) unit.

In one embodiment, when R^{Si} is a group of formula (S4), two or more, for example, 2-27, preferably 2-9, more preferably 2-6, even more preferably 2-3, and particularly preferably 3 (SiR³⁴ₙ₂R³⁵₃₋ₙ₂) units in which n2 is 1-3, preferably 2 or 3, and more preferably 3 are present in each terminal moiety of formula (1) and (2).

In a preferable embodiment, when R³²' is present in formula (S4), n2 is an integer of 1-3, preferably 2 or 3, and more preferably 3 in at least one and preferably all R³²' groups.

In a preferable embodiment, when R³² is present in formula (S4), n2 is an integer of 1-3, preferably 2 or 3, and more preferably 3 in at least one and preferably all R³² groups.

In a preferable embodiment, when R^{e1} is present in formula (S4), n2 is an integer of 1-3, preferably 2 or 3, and more preferably 3 in at least one and preferably all R^{a1} groups.

In a preferable embodiment, k2 is 0, l2 is 2 or 3 and preferably 3, and n2 is 2 or 3 and preferably 3 in the formula (S4).

R^{g1} and R^{h1} are each independently at each occurrence - Z⁴-SiR¹¹ₙ₁R¹²₃₋ₙ₁, -Z⁴-SiR^{a1}ₖ₁R^{b1}ₗ₁R^{c1}ₘ₁, -Z⁴-CR^{d1}ₖ₂R^{e1}ₗ₂R^{f1}ₘ₂. Here, R¹¹, R¹², R^{a1}, R^{b2}, R^{c1}, R^{d1}, R^{e1}, R^{f1}, n1, k1, l1, m1, k2, 12, and m2 have the same meanings as those described above.

In a preferable embodiment, R^{g1} and R^{h1} are each independently -Z⁴-SiR¹¹ₙ₁R¹²₃₋ₙ₁.

Z⁴ is each independently at each occurrence a single bond, oxygen, or a divalent organic group. The right side of the structure denoted as Z⁴ below binds to (SiR¹¹ₙ₁R¹²₃₋ₙ₁).

In one embodiment, Z⁴ is oxygen.

In one embodiment, Z⁴ is a divalent organic group.

Z⁴ is preferably C₁₋₆-alkylene, -(CH₂)_{z5"}-O-(CH₂)_{ze"}-(wherein z5" is an integer of 0-6 such as an integer of 1-6, and z6" is an integer of 0-6 such as an integer of 1-6), or -(CH₂)_{z7"}-phenylene-(CH₂)_{z8"}- (wherein z7" is an integer of 0-6 such as an integer of 1-6, and z8" is an integer of 0-6 such as an integer of 1-6). The C₁₋₆-alkylene may be linear or branched, and is preferably linear. These groups may be substituted with, for example, one or more substituents selected from F, C₁₋₆-alkyl, C₂₋₆-alkenyl, and C₂₋₆-alkynyl, and are preferably unsubstituted.

In a preferable embodiment, Z⁴ is C₁₋₆-alkylene or - (CH₂)_{z7"}-phenylene-(CH₂)_{z8"}-, and preferably -phenylene-(CH₂)_{z8"}-. When Z³ is such a group, light resistance, in particular ultraviolet resistance, can be more increased.

In another preferable embodiment, Z⁴ is C₁₋₃-alkylene. In one embodiment, Z⁴ may be -CH₂CH₂CH₂-. In another embodiment, Z⁴ may be -CH₂CH₂-.

In one embodiment, R^{Si} is a group of formula (S2), (S3), (S4), or (S5). These compounds are capable of forming a surface-treating layer having high surface lubricity.

In one embodiment, R^{Si} is a group of formula (S1), (S3), (S4), or (S5). These compounds have a plurality of hydrolyzable groups at one terminal, and are therefore capable of forming a surface-treating layer that firmly adheres to a substrate and that has high abrasion durability.

In one embodiment, R^{Si} is a group of formula (S3), (S4), or (S5). These compounds have a plurality of hydrolyzable groups at one terminal, and are therefore capable of forming a surface-treating layer that firmly adheres to a substrate and that has high abrasion durability.

In one embodiment, R^{Si} is a group of formula (S1), (S3), or (S4). These compounds have a plurality of hydrolyzable groups at one terminal, and are therefore capable of forming a surface-treating layer that firmly adheres to a substrate and that has high abrasion durability.

In one embodiment, R^{Si} is a group of formula (S3) or (S4). These compounds can have a plurality of hydrolyzable groups branched from one Si atom or C atom at one terminal, and are therefore capable of forming a surface-treating layer that has higher abrasion durability.

In one embodiment, R^{Si} is a group of formula (S1).

In one embodiment, R^{Si} is a group of formula (S2).

In one embodiment, R^{Si} is a group of formula (S3).

In one embodiment, R^{Si} is a group of formula (S4).

In one embodiment, R^{Si} is a group of formula (S5).

In a preferable embodiment, R^{Si} is a group of formula (S4). When R^{Si} is of formula (S4), a surface-treating layer having high abrasion durability, high chemical resistance, and high fingerprint removability by wiping can be formed.

In the formulae (1) and (2), X^{A} is each independently a single bond or a group of the formula:

-(X⁵¹)ₚ₅-

wherein
X⁵¹ is each independently at each occurrence selected from -O-, -S-, an o-, m- or p-phenylene group, -C(O)O-, - OC(O)-, -Si(R⁵³)₂-, -(Si(R⁵³)₂O)ₘ₅-Si(R⁵³)₂-, -CONR⁵⁴-, -NR⁵⁴CO-, -O-CONR⁵⁴-, -NR⁵⁴CO-O-, -NR⁵⁴-, and - (CH₂)ₙ₅-,
R⁵³ is each independently at each occurrence phenyl, C₁₋₆-alkyl, or C₁₋₆-alkoxy, preferably phenyl or C₁₋₆-alkyl, and more preferably methyl,
R⁵⁴ is each independently at each occurrence H, phenyl, or C₁₋₆-alkyl (preferably methyl),
m5 is each independently at each occurrence an integer of 1-100 and preferably an integer of 1-20,
n5 is each independently at each occurrence an integer of 1-20, preferably an integer of 1-6, and more preferably an integer of 1-3, and
p5 is an integer of 1-10, preferably an integer of 1-5, and more preferably an integer of 1-3.
In the description of X^{A}, the left side of each group is bonded to R^{F1} or R^{F2} in the formulae, and the right side is bonded to the carbon atom of CONR¹.

In one embodiment, X^{A} is a single bond.

In another embodiment, X^{A} is -(X⁵¹)ₚ₅-.

In a preferable embodiment, X⁵¹ is each independently at each occurrence selected from -O-, -C(O)O-, -OC(O)-, - CONR⁵⁴-, -NR⁵⁴CO-, -O-CONR⁵⁴-, -NR⁵⁴CO-O-, -NR⁵⁴-, and - (CH₂)ₙ₅-.

In a preferable embodiment, X⁵¹ is each independently at each occurrence selected from -O-, -CONR⁵⁴-, -NR⁵⁴CO-, and -(CH₂)ₙ₅-.

In a more preferable embodiment, X⁵¹ is each independently at each occurrence selected from -O- and - (CH₂)ₙ₅-.

In another embodiment, X^{A} is each independently a single bond or a group of the formula:

-(R⁵¹')_{p5'}-(X⁵¹')_{q5'}-(R⁵¹')_{p5"}-

wherein
R⁵¹' is each independently C₁₋₆-alkylene,
X⁵¹' is O,
p5' is 0 or 1,
p5" is 0 or 1, and
q5' is 0 or 1,
provided that at least one of p5' and p5" is 1.

In another embodiment, X^{A} is each independently C₁₋₆-alkylene.

In the formulae (1) and (2), X^{B} is each independently a single bond or a group of the formula:

-(X⁶¹)ₚ₆-

wherein
X⁶¹ is each independently at each occurrence selected from -O-, -S-, an o-, m- or p-phenylene group, -C(O)O-, - OC(O)-, -Si(R⁶³)₂-, -(Si(R⁶³)₂O)ₘ₆-Si(R⁶³)₂-, -CONR⁶⁴-, -NR⁶⁴CO-, -O-CONR⁶⁴-, -NR⁶⁴CO-O-, -NR⁶⁴-, and -(CH₂)ₙ₆-,
R⁶³ is each independently at each occurrence phenyl, C₁₋₆-alkyl, or C₁₋₆-alkoxy, preferably phenyl or C₁₋₆-alkyl, and more preferably methyl,
R⁶⁴ is each independently at each occurrence H, phenyl, or C₁₋₆-alkyl (preferably methyl),
m6 is each independently at each occurrence an integer of 1-100 and preferably an integer of 1-20,
n6 is each independently at each occurrence an integer of 1-20, preferably an integer of 1-6, and more preferably an integer of 1-3, and
p6 is an integer of 1-10, preferably an integer of 1-5, and more preferably an integer of 1-3.
In the description of X^{B}, the left side of each group is bonded to the nitrogen atom of CONR¹, and the right side is bonded to R^{Si}.

In one embodiment, X^{B} is a single bond.

In another embodiment, X^{B} is -(X⁶¹)ₚ₆-.

In a preferable embodiment, X⁶¹ is each independently at each occurrence selected from -O-, -C(O)O-, -OC(O)-, - CONR⁶⁴-, -NR⁶⁴CO-, -O-CONR⁶⁴-, -NR⁶⁴CO-O-, -NR⁶⁴-, and -(CH₂)ₙ₆-.

In a preferable embodiment, X⁶¹ is each independently at each occurrence selected from -O-, -CONR⁶⁴-, -NR⁶⁴CO-, and -(CH₂)ₙ₆-.

In a more preferable embodiment, X⁶¹ is each independently at each occurrence selected from -O- and - (CH₂)ₙ₆-.

In another embodiment, X^{B} is each independently a single bond or a group of the formula:

-(R⁶¹')_{p6'}-(X⁶¹')_{q6'}-(R⁶¹')_{p6"}-

wherein
R⁶¹' is each independently C₁₋₆-alkylene,
X⁶¹' is O,
p6' is 0 or 1,
p6" is 0 or 1, and
q6' is 0 or 1,
provided that at least one of p6' and p6" is 1.

In another embodiment, X^{B} is each independently C₁₋₆-alkylene.

In one embodiment, X^{A} is a single bond, and X^{B} is each independently C₁₋₆-alkylene.

The number average molecular weight of the fluoropolyether group-containing silane compound of formula (1) or (2) may be, but is not limited to, 5 × 10² to 1 × 10⁵. In this range, the number average molecular weight is preferably 2,000-32,000 and more preferably 2,500-12,000 from the viewpoint of abrasion durability. The "number average molecular weight" is a value obtained by ¹⁹F-NMR measurement.

In one embodiment, the present compound may be a fluoropolyether group-containing silane compound of formula (1).

In one embodiment, the present compound may be a fluoropolyether group-containing silane compound of formula (2).

The compound of the formulae (1) and (2) can be produced using a method that is known per se.

For example, the compounds of the formulae (1) and (2) can be obtained by reacting a fluoropolyether group-containing carboxylic acid with an amine substituted with a group containing an alkyl group and an allyl group to give an amide compound, and then reacting the allyl group of the amide compound with triacetoxymethylsilane.

In one embodiment, the compounds of the formulae (1) and (2) can be obtained by reacting a carboxylic acid compound of formula (1') or (2'): 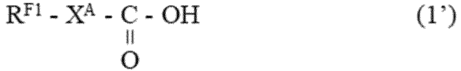 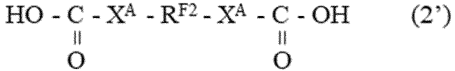
wherein each symbol has the same meaning as above, with an amine compound of the formula: 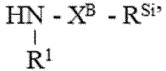
wherein R¹ and R^{B} have the same meanings as above, and R^{Si}' has the same meaning as R^{Si} or is a precursor of R^{Si},
to give an amide compound of formula (1") or (2"): 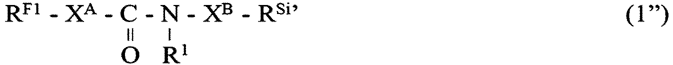 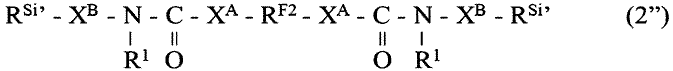
wherein each symbol has the same meaning as above, and converting R^{Si}' to R^{Si} as necessary.

In one embodiment, the compound wherein R^{Si} is of the formula (S4) can be obtained by reacting a carboxylic acid compound of formula (1') or (2'): 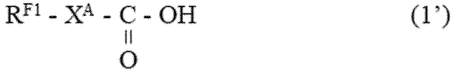 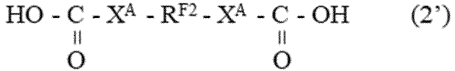
wherein each symbol has the same meaning as above, with an amine compound of the formula: 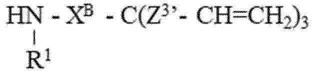
wherein R¹ and R^{B} have the same meanings as above, and Z³ is a single bond or a divalent organic group, preferably an alkylene group, to give an amide compound of formula (1‴) or (2‴): 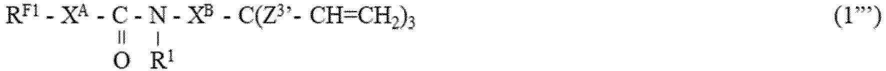 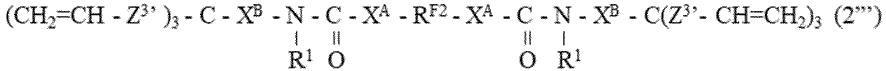
wherein each symbol has the same meaning as above, and reacting the amide compound with a silane compound represented by:

   HSiR³⁴ₙ₂R³⁵₃₋ₙ₂
wherein each symbol has the same meaning as above.

Next, the present surface-treating agent will now be described.

The present surface-treating agent contains at least one fluoropolyether group-containing silane compound of formula (1) or (2).

In one embodiment, the fluoropolyether group-containing silane compound in the present surface-treating agent is a compound of formula (1), in another embodiment, it is a compound of formula (2), and in another embodiment, it is a compound of formula (1) and a compound of formula (2).

In the present surface-treating agent, the content of the compound of formula (2) is preferably 0.1-35 mol% based on the total of the compounds of formula (1) and (2). The lower limit of the content of the compound of formula (2) may be preferably 0.1 mol%, more preferably 0.2 mol%, even more preferably 0.5 mol%, yet more preferably 1 mol%, particularly preferably 2 mol%, and especially 5 mol%, based on the total of the compounds of formula (1) and (2). The upper limit of the content of the compound of formula (2) may be preferably 35 mol%, more preferably 30 mol%, even more preferably 20 mol%, and yet more preferably 15 mol% or 10 mol%, based on the total of the compounds of formula (1) and (2). The compound of formula (2) is preferably 0.1-30 mol%, more preferably 0.1-20 mol%, even more preferably 0.2-10 mol%, yet more preferably 0.510 mol%, and particularly preferably 1-10 mol%, for example, 2-10 mol%, or 5-10 mol%, based on the total of the compounds of formula (1) and (2). With the compound of formula (2) being within such a range, abrasion durability can be more increased.

The content of the compound of formula (1) or (2) is preferably 0.1-50.0 mass%, more preferably 1.0-30.0 mass%, even more preferably 5.0-25.0 mass%, and particularly preferably 10.0-20.0 mass% based on the entirety of the surface-treating agent. With the content of the fluoropolyether group-containing silane compound being within the above range, higher water- and oil-repellency and friction durability can be obtained.

The present surface-treating agent may contain, for example, a solvent, an (unreactive) fluoropolyether compound that can be understood as a fluorine-containing oil, preferably a perfluoro(poly)ether compound (hereinafter, collectively referred to as a "fluorine-containing oil"), an (unreactive) silicone compound that can be understood as a silicone oil (hereinafter, referred to as a "silicone oil"), an alcohol, a catalyst, a surfactant, a polymerization inhibitor, and a sensitizer.

Examples of the solvent include aliphatic hydrocarbons such as hexane, cyclohexane, heptane, octane, nonane, decane, undecane, dodecane, and mineral spirits; aromatic hydrocarbons such as benzene, toluene, xylene, naphthalene, and solvent naphtha; esters such as methyl acetate, ethyl acetate, propyl acetate, n-butyl acetate, isopropyl acetate, isobutyl acetate, cellosolve acetate, propylene glycol methyl ether acetate, carbitol acetate, diethyl oxalate, ethyl pyruvate, ethyl 2-hydroxybutyrate, ethyl acetoacetate, amyl acetate, methyl lactate, ethyl lactate, methyl 3-methoxypropionate, ethyl 3-methoxypropionate, methyl 2-hydroxyisobutyrate, and ethyl 2-hydroxyisobutyrate; ketones such as acetone, methyl ethyl ketone, methyl isobutyl ketone, 2-hexanone, cyclohexanone, methyl amino ketone, and 2-heptanone; glycol ethers such as ethyl cellosolve, methyl cellosolve, methyl cellosolve acetate, ethyl cellosolve acetate, propylene glycol monomethyl ether, propylene glycol monoethyl ether, propylene glycol monobutyl ether, propylene glycol monomethyl ether acetate, propylene glycol monoethyl ether acetate, propylene glycol monobutyl ether acetate, dipropylene glycol dimethyl ether, and ethylene glycol monoalkyl ether; alcohols such as methanol, ethanol, iso-propanol, n-butanol, isobutanol, tert-butanol, sec-butanol, 3-pentanol, octyl alcohol, 3-methyl-3-methoxybutanol, and tert-amyl alcohol; glycols such as ethylene glycol and propylene glycol; cyclic ethers such as tetrahydrofuran, tetrahydropyran, and dioxane; amides such as N,N-dimethylformamide and N,N-dimethylacetamide; ether alcohols such as methyl cellosolve, cellosolve, isopropyl cellosolve, butyl cellosolve, and diethylene glycol monomethyl ether; diethylene glycol monoethyl ether acetate; and fluorine-containing solvents such as 1,1,2-trichloro-1,2,2-trifluoroethane, 1,2-dichloro-1,1,2,2-tetrafluoroethane, dimethyl sulfoxide, 1,1-dichloro-1,2,2,3,3-pentafluoropropane (HCFC 225), Zeorora H, HFE 7100, HFE 7200, HFE 7300, CF₃CH₂OH, CF₃CF₂CH₂OH, and (CF₃)₂CHOH. Alternatively, the solvent may be a mixed solvent of two or more of such solvents.

Examples of the fluorine-containing oil include compounds (perfluoro(poly)ether compounds) of formula (3):

Rf⁵-(OC₄F₈)_{a'}-(OC₃F₆)_{b'}-(OC₂F₄)_{c'}-(OCF₂)_{d'}-Rf⁶ ... (3)

wherein Rf⁵ is C₁₋₁₆-alkyl optionally substituted with one or more F (preferably C₁₋₁₆-perfluoroalkyl), Rf⁶ is C₁₋₁₆-alkyl optionally substituted with one or more F (preferably, C₁₋₁₆-perfluoroalkyl), F, or H, and Rf⁵ and Rf⁶ more preferably are each independently C₁₋₃-perfluoroalkyl.

a', b', c', and d' respectively represent the numbers of 4 repeating units of perfluoro(poly)ether constituting the main backbone of the polymer and are mutually independently an integer of 0-300, and (a'+b'+c'+d') is at least 1, preferably 1-300, and more preferably 20-300. The order of the repeating units in parentheses provided with a subscript a', b', c', or d' is not limited. Among such repeating units, -(OC₄F₈)- may be any of -(OCF₂CF₂CF₂CF₂)-, - (OCF(CF₃)CF₂CF₂)-, -(OCF₂CF(CF₃)CF₂)-, -(OCF₂CF₂CF(CF₃)) -, - (OC(CF₃)₂CF₂)-, -(OCF₂C(CF₃)₂)-, -(OCF(CF₃)CF(CF₃))-, - (OCF(C₂F₅)CF₂)-, and (OCF₂CF(C₂F₅))-, but it is preferably - (OCF₂CF₂CF₂CF₂)-. -(OC₃F₆)- may be any of -(OCF₂CF₂CF₂)-, - (OCF(CF₃)CF₂)-, and (OCF₂CF(CF₃))-, and is preferably - (OCF₂CF₂CF₂)-. -(OC₂F₄)- may be any of -(OCF₂CF₂)- and (OCF(CF₃))-, and is preferably -(OCF₂CF₂)-.

Examples of the perfluoro(poly)ether compound of formula (3) include compounds of any of the formulae (3a) and (3b) (one of which may be used singly, or two or more may be used as a mixture):

Rf⁵-(OCF₂CF₂CF₂)_{b"}-Rf⁶ ... (3a)

Rf⁵-(OCF₂CF₂CF₂CF₂)_{a"}-(OCF₂CF₂CF₂)_{b"}-(OCF₂CF₂)_{c"}-(OCF₂)_{d"}- Rf⁶ ... (3b)

wherein Rf⁵ and Rf⁶ are as described above; in formula (3a), b" is an integer of 1-100; and in formula (3b), a" and b" are each independently an integer of 0-30, and c" and d" are each independently an integer of 1-300. The order of the repeating units in parentheses provided with a subscript a", b", c", or d" is not limited.

From another viewpoint, the fluorine-containing oil may be a compound of the formula Rf³-F wherein Rf³ is C₅₋₁₆-perfluoroalkyl. The fluorine-containing oil may be a chlorotrifluoroethylene oligomer.

The fluorine-containing oil may have an average molecular weight of 500-10,000. The molecular weight of the fluorine-containing oil may be measured with GPC.

The fluorine-containing oil may be contained in an amount of, for example, 0-50 mass%, preferably 0-30 mass%, and more preferably 0-5 mass% based on the present surface-treating agent. In one embodiment, the present surface-treating agent is substantially free of the fluorine-containing oil. Being substantially free of the fluorine-containing oil means that the fluorine-containing oil is not contained at all, or an extremely small amount of the fluorine-containing oil may be contained.

In one embodiment, the average molecular weight of the fluorine-containing oil may be greater than the average molecular weight of the fluoropolyether group-containing silane compound. With such average molecular weights, better abrasion durability and surface lubricity can be obtained particularly when forming the surface-treating layer by a vacuum deposition method.

In one embodiment, the average molecular weight of the fluorine-containing oil may be smaller than the average molecular weight of the fluoropolyether group-containing silane compound. With such average molecular weights, a cured product having high abrasion durability and high surface lubricity can be formed while suppressing deterioration of the transparency of the surface-treating layer obtained from the compound.

The fluorine-containing oil contributes to increasing the surface lubricity of the layer formed of the present surface-treating agent.

For example, a linear or cyclic silicone oil having 2,000 or less siloxane bonds can be used as the silicone oil. The linear silicone oil may be a so-called straight silicone oil or modified silicone oil. Examples of the linear silicone oil include dimethyl silicone oil, methyl phenyl silicone oil, and methyl hydrogen silicone oil. Examples of the modified silicone oil include those obtained by modifying linear silicone oil with alkyl, aralkyl, polyether, higher fatty acid ester, fluoroalkyl, amino, epoxy, carboxyl, or alcohol. An example of the cyclic silicone oil includes cyclic dimethylsiloxane oil.

In the present surface-treating agent, the silicone oil may be contained in an amount of, for example, 0-300 parts by mass, and preferably 50-200 parts by mass, based on total 100 parts by mass of the fluoropolyether group-containing silane compound of the present disclosure (in the case of two or more kinds, the total thereof, and the same applies below).

The silicone oil contributes to increasing the surface lubricity of the surface-treating layer.

Examples of the alcohol include alcohols having 1-6 carbon atoms optionally substituted with one or more F, such as methanol, ethanol, iso-propanol, tert-butanol, CF₃CH₂OH, CF₃CF₂CH₂OH, and (CF₃)₂CHOH. Such an alcohol added to the surface-treating agent increases the stability of the surface-treating agent and improves the miscibility between the perfluoropolyether group-containing silane compound and the solvent.

The alcohol is preferably 2,2,3,3,3-pentafluoro-1-propanol or 2,2,2-trifluoroethanol.

Examples of the catalyst include acids (such as acetic acid and trifluoroacetic acid), bases (such as ammonia, triethylamine, and diethylamine), and transition metals (such as Ti, Ni, and Sn).

The catalyst promotes hydrolysis and dehydrative condensation of the present compound and promotes formation of a layer formed of the present surface-treating agent.

Examples of further components include, in addition to those described above, tetraethoxysilane, methyltrimethoxysilane, 3-aminopropyltrimethoxysilane, 3-glycidoxypropyltrimethoxysilane, and methyltriacetoxysilane.

The present surface-treating agent can be formed into pellets by impregnating a porous material such as a porous ceramic material or a metal fiber such as a fiber obtained by, for example, solidifying steel wool in a cotton-like form with the surface-treating agent. Such pellets can be used in, for example, vacuum deposition.

The present surface-treating agent may contain, in addition to the components described above, trace amounts of e.g. Pt, Rh, Ru, 1,3-divinyltetramethyldisiloxane, triphenylphosphine, NaCl, KCl, and silane condensates as impurities.

Below, the article of the present disclosure ("the present article") will now be described.

The present article includes a substrate and a layer (a surface-treating layer) on the substrate surface, the layer being formed of the present surface-treating agent.

The substrate usable in the present disclosure may be composed of any suitable material such as glass, resin (which may be natural or synthetic resin such as a commonly used plastic material), metal, ceramics, semiconductors (such as silicon and germanium), fiber (such as woven fabric and nonwoven fabric), fur, leather, wood, pottery, stone, building materials, and sanitary articles.

For example, when the article to be produced is an optical member, the material constituting the surface of the substrate may be a material for an optical member, such as glass or a transparent plastic. When the article to be produced is an optical member, some layer (or film) such as a hard coat layer or an antireflection layer may be formed on the surface (the outermost layer) of the substrate. The antireflection layer may be any of a single-layer antireflection layer and a multi-layer antireflection layer. Examples of inorganic substances usable in the antireflection layer include SiO₂, SiO, ZrO₂, TiO₂, TiO, Ti₂O₃, Ti₂O₅, Al₂O₃, Ta₂O₅, Ta₃O₅, Nb₂O₅, HfO₂, Si₃N₄, CeO₂, MgO, Y₂O₃, SnO₂, MgF₂, and WO₃. One of these inorganic substances may be used singly, or two or more may be used in combination (for example, as a mixture). In the case of a multi-layer antireflection layer, SiO₂ and/or SiO is preferably used in the outermost layer thereof. When the article to be produced is an optical glass component for a touch panel, a part of the surface of the substrate (glass) may have a transparent electrode such as a thin film in which e.g. indium tin oxide (ITO) or indium zinc oxide is used. The substrate, according to its specific configuration or the like, may have, for example, an insulating layer, an adhesive layer, a protecting layer, a decorated frame layer (I-CON), an atomizing film layer, a hard coating layer, a polarizing film, a phase difference film, or a liquid crystal display module.

The shape of the substrate is not limited, and may be, for example, in the form of a plate or a film. The surface region of the substrate on which a surface-treating layer is to be formed may be at least a part of the substrate surface, and may be suitably determined according to the application, and specific configuration of an article to be produced.

In one embodiment, the substrate, or at least the surface portion thereof, may be composed of a material originally having OH. Examples of the material include glass, as well as metal (in particular, base metal) where a natural oxidized film or a thermal oxidized film is formed on the surface, ceramics, and semiconductors. Alternatively, when the substrate has an insufficient amount of hydroxyl groups or when the substrate originally has no hydroxyl group as in resin, a pre-treatment may be performed on the substrate to thereby introduce or increase hydroxyl groups on the surface of the substrate. Examples of such a pre-treatment include a plasma treatment (for example, corona discharge) and ion beam irradiation. The plasma treatment can be suitably utilized to not only introduce or increase hydroxyl groups to the substrate surface, but also clean the substrate surface (e.g. remove foreign matter). Another example of such a pre-treatment is a method wherein a monolayer of a surface adsorbent having a carbon-carbon unsaturated bonding group is formed on the surface of the substrate by e.g. a LB method (a Langmuir-Blodgett method) or a chemical adsorption method beforehand, and thereafter cleaving the unsaturated bond under an atmosphere containing e.g. oxygen or nitrogen.

In another embodiment, the substrate, or at least the surface portion thereof, may be composed of a material comprising another reactive group such as a silicone compound having one or more Si-H groups or alkoxysilane.

In a preferable embodiment, the substrate is glass. Such glass is preferably sapphire glass, soda-lime glass, alkali aluminosilicate glass, borosilicate glass, alkalifree glass, crystal glass, or quartz glass, and is particularly preferably chemically strengthened soda-lime glass, chemically strengthened alkali aluminosilicate glass, or chemically bonded borosilicate glass.

The present article can be produced by forming a layer of the present surface-treating agent on the surface of the substrate and optionally post-treating the layer, thereby forming a layer from the present surface-treating agent.

The layer of the present surface-treating agent can be formed by applying the surface-treating agent to the surface of the substrate so as to coat the surface. The coating method is not limited. For example, a wet coating method and a dry coating method can be used.

Examples of the wet coating method include dip coating, spin coating, flow coating, spray coating, roll coating and gravure coating.

Examples of the dry coating method include deposition (usually, vacuum deposition), sputtering and CVD. Specific examples of the deposition method (usually, a vacuum deposition method) include resistive heating, high-frequency heating using electron beam or microwave, and ion beam. Specific examples of the CVD method include plasma-CVD, optical CVD and thermal CVD.

Furthermore, coating by an atmospheric pressure plasma method can be performed.

When using the wet coating method, the present surface-treating agent can be applied to the substrate surface after being diluted with a solvent. From the viewpoint of the stability of the composition of the present disclosure and the volatility of solvents, the following solvents are preferably used: perfluoroaliphatic hydrocarbons having 5-12 carbon atoms (such as perfluorohexane, perfluoromethylcyclohexane, and perfluoro-1,3-dimethylcyclohexane); polyfluoroaromatic hydrocarbons (such as bis(trifluoromethyl)benzene); polyfluoroaliphatic hydrocarbons (such as C₆F₁₃CH₂CH₃ (such as Asahiklin (registered trademark) AC-6000 manufactured by Asahi Glass Co., Ltd.), and 1,1,2,2,3,3,4-heptafluorocyclopentane (such as Zeorora (registered trademark) H manufactured by Zeon Corporation)); alkyl perfluoroalkyl ethers (the perfluoroalkyl group and the alkyl group may be linear or branched) such as hydrofluoroether (HFE) (such as perfluoropropyl methyl ether (C₃F₇OCH₃) (such as Novec (trademark) 7000 manufactured by Sumitomo 3M Limited), perfluorobutyl methyl ether (C₄F₉OCH₃) (such as Novec (trademark) 7100 manufactured by Sumitomo 3M Limited), perfluorobutyl ethyl ether (C₄F₉OC₂H₅) (such as Novec (trademark) 7200 manufactured by Sumitomo 3M Limited), and perfluorohexyl methyl ether (C₂F₅CF(OCH₃)C₃F₇) (such as Novec (trademark) 7300 manufactured by Sumitomo 3M Limited), or CF₃CH₂OCF₂CHF₂ (such as Asahiklin (registered trademark) AE-3000 manufactured by Asahi Glass Co., Ltd.)). One of these solvents may be used singly, or two or more may be used as a mixture. In particular, hydrofluoroether is preferable, and perfluorobutyl methyl ether (C₄F₉OCH₃) and/or perfluorobutyl ethyl ether (C₄F₉OC₂H₅) is particularly preferable.

When using the dry coating method, the present surface-treating agent may be directly subjected to the dry coating method or may be diluted with the above solvent before being subjected to the dry coating method.

A layer of the surface-treating agent is preferably formed such that the present surface-treating agent of the present disclosure coexists in the layer with a catalyst for hydrolysis and dehydrative condensation. Conveniently, in the case of a wet coating method, the present surface-treating agent is diluted with a solvent, and then, immediately before application to the substrate surface, a catalyst may be added to the diluted solution of the present surface-treating agent. In the case of a dry coating method, the present surface-treating agent to which a catalyst has been added is directly used to a deposition (usually vacuum deposition) treatment, or a pellet-like material may be used to a deposition (usually vacuum deposition) treatment, wherein the pellet is obtained by impregnating a porous body of metal such as iron or copper with the present surface-treating agent to which the catalyst has been added.

Any suitable acid or base can be used as a catalyst. For example, acetic acid, formic acid, and trifluoroacetic acid can be used as the acid catalyst. The base catalyst may be, for example, ammonia or organic amine.

The surface-treating layer included in the present article has both high abrasion durability. Moreover, the surface-treating layer may have not only high abrasion durability but also have, depending on the formulation of the surface-treating agent used, water-repellency, oil-repellency, antifouling properties (e.g., preventing grime such as fingerprints from adhering), waterproof properties (e.g. preventing water from entering electronic components), surface lubricity (or lubricity, for example, such as removability by wiping of grime such as fingerprints, and excellent tactile sensations to the fingers), and chemical resistance, and may be suitably used as a functional thin film.

Accordingly, the present disclosure further relates to an optical material having the surface-treating layer as the outermost layer.

The optical material preferably includes a wide variety of optical materials in addition to optical materials relating to e.g. displays as exemplified below: for example, displays such as cathode ray tubes (CRTs; for example, PC monitors), liquid crystal displays, plasma displays, organic EL displays, inorganic thin-film EL dot matrix displays, rear projection displays, vacuum fluorescent displays (VFDs), field emission displays (FEDs); protective plates for such displays; and those obtained by performing an antireflection film treatment on their surfaces.

The present article may be, for example, an optical member. Examples of the optical member include lenses of glasses; front surface protective plates, antireflection plates, polarizing plates, and anti-glare plates for displays such as PDPs and LCDs; touch panel sheets for devices such as mobile phones and personal digital assistants; disc surfaces of optical discs such as Blu-ray (registered trademark) discs, DVD discs, CD-Rs, and MOs; optical fibers; and display surfaces of watches and clocks.

The present article may be medical equipment or a medical material. The article having a layer that is obtained according to the present disclosure may be an automobile interior or exterior member. Examples of the exterior material include the following: windows, light covers, and external camera covers. Examples of the interior material include the following: instrument panel covers, navigation system touch panels, and decorative interior materials.

The thickness of the layer is not limited. The thickness of the layer in the case of an optical member is in the range of 1-50 nm, 1-30 nm, and preferably 1-15 nm, from the viewpoint of optical performance, abrasion durability, and antifouling properties.

So far, the present has been described in detail. However, the article of the present disclosure, and the method for producing the article, are not limited to those exemplified above.

### Examples

Hereinafter, the article of the present disclosure will now be described in Examples. In the Examples, the order of the repeating units constituting fluoropolyether is not limited, and the chemical formulae shown below indicate average compositions.

### (Synthetic Example 1)

A mixture of HOCOCF₂-(OCF₂CF₂)ₘ-(OCF₂)ₙ-COOH (m ≈ 21, n ≈ 35) and CF₃-(OCF₂CF₂)ₘ-(OCF₂)ₙ-COOH (m ≈ 21, n ≈ 35) (4.0 g, with the content of CF₃-(OCF₂CF₂)ₘ-(OCF₂)ₙ-COOH being 4 mol%) was dissolved in 1,3-bis(trifluoromethyl)benzene (6.0 g), and ice-cooled. After thionyl chloride (1.5 g) was added dropwise to the solution, N,N-dimethylformamide (0.3 mg) was further added, and the mixture was stirred at 60°C for 2 hours. Thionyl chloride was distilled off from this reaction solution, then N-octyl-2,2-di(2-propenyl)-4-pentylamine (0.4 g) and N,N-diisopropylethylamine (1.0 g) were added while ice-cooling the solution, and the mixture was stirred at room temperature for 3 hours. The end point of the reaction was confirmed by ¹⁹F-NMR according to that the chemical shift of the carbonyl group α position -CF₂- of HOCOCF₂- (OCF₂CF₂)ₘ-(OCF₂)ₙ-COOH (m ≈ 21, n ≈ 35) shifted to a low magnetic field, and by ¹H-NMR according to that the methylene proton at the amino group α-position of diallylamine shifted to a low magnetic field. To the reaction solution was added 1 N hydrochloric acid, and the separated lower layer was washed with water, dried over magnesium sulfate, and concentrated. The resulting concentrate was dissolved in perfluorohexane and washed with acetone three times, and thereby a mixture (4.0 g) containing a polyether group-containing compound (A) and a polyether group-containing compound (A') was obtained.

### Polyether group-containing compound (A):

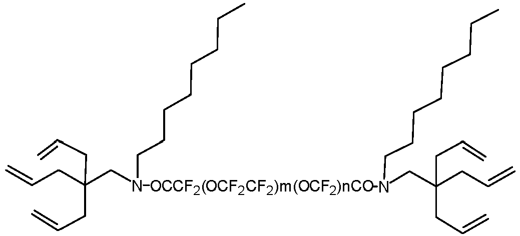

(m ≈ 21, n ≈ 35)

### Polyether group-containing compound (A'):

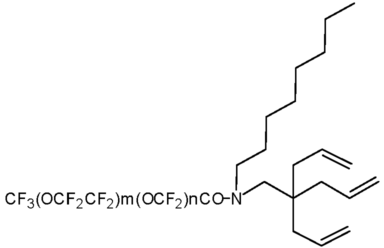

(m ≈ 21, n ≈ 35)

### (Synthetic Example 2)

The mixture (4.0 g) obtained in Synthetic Example 1 was dissolved in 1,3-bis(trifluoromethyl)benzene (5 ml), then triacetoxymethylsilane (0.01 g) and a xylene solution (0.06 ml) containing 2% Pt complex of 1,3-divinyl-1,1,3,3-tetramethyldisiloxane were added, trichlorosilane (1.0 g) was introduced, and the mixture was heated to 60°C and stirred for 4 hours. Thereafter, volatile matter was distilled off from the resulting solution under reduced pressure, then a mixed solution of methanol (0.1 g) and trimethyl orthoformate (3.0 g) was added, and the mixture was heated to 60°C and stirred for 3 hours. Thereafter, purification was performed, and thus a mixture (4.1 g) containing the following polyether group-containing compound (B) and polyether group-containing compound (B') having trimethoxysilyl groups at the terminals was obtained.

### Polyether group-containing compound (B):

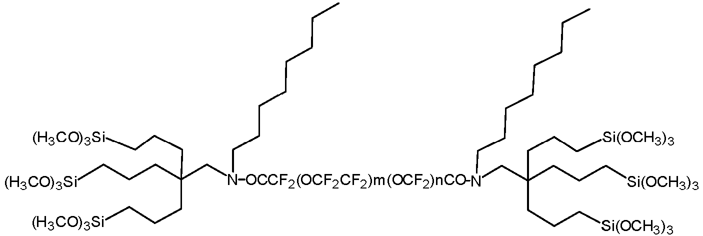

(m ≈ 21, n ≈ 35)

### Polyether group-containing compound (B'):

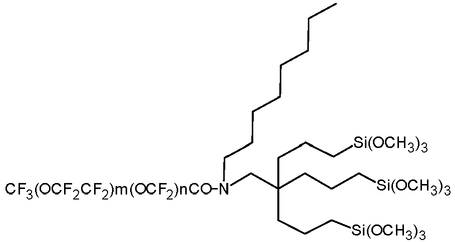

(m ≈ 21, n ≈ 35)

### (Synthetic Example 3)

A mixture (4.2 g) containing a polyether group-containing compound (C) and a polyether group-containing compound (C') was obtained in the same manner as Synthetic Examples 1 and 2 except that N-dodecyl-2,2-di(2-propenyl)-4-pentylamine was used in place of N-octyl-2,2-di(2-propenyl)-4-pentylamine. 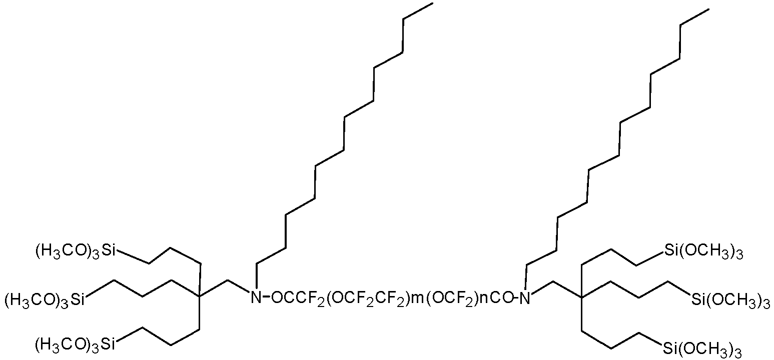 (m ≈ 21, n ≈ 35)

### Polyether group-containing compound (C'):

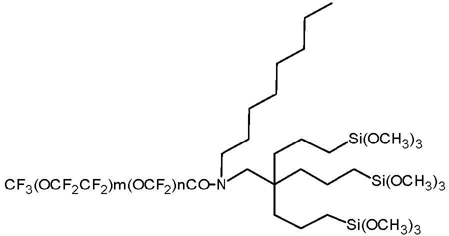

(m ≈ 21, n ≈ 35)

### (Synthetic Example 4)

A mixture (4.1 g) containing a polyether group-containing compound (D) and a polyether group-containing compound (D') was obtained in the same manner as Synthetic Examples 1 and 2 except that N-methyl-2,2-di(2-propenyl)-4-pentylamine was used in place of N-octyl-2,2-di(2-propenyl)-4-pentylamine.

### Polyether group-containing compound (D):

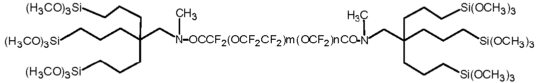

(m ≈ 21, n ≈ 35)

### Polyether group-containing compound (D'):

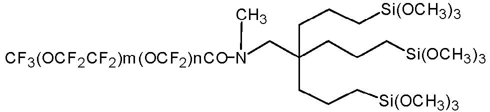

(m ≈ 21, n ≈ 35)

### (Synthetic Example 5)

A mixture (3.9 g) containing a polyether group-containing compound (E) and a polyether group-containing compound (E') was obtained in the same manner as Synthetic Examples 1 and 2 except that N-(3,3,4,4,5,5,6,6,7,7,8,8,8-tridecafluorooctyl)-2,2-di(2-propenyl)-4-pentylamine was used in place of N-octyl-2,2-di(2-propenyl)-4-pentylamine.

### Polyether group-containing compound (E):

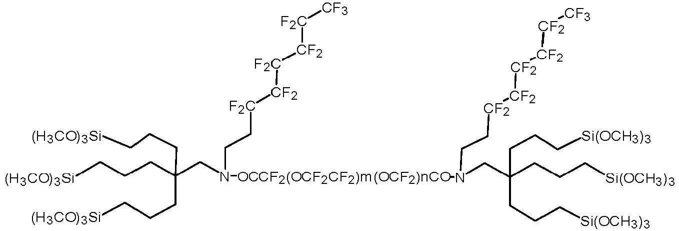

(m ≈ 21, n ≈ 35)

### Polyether group-containing compound (E'):

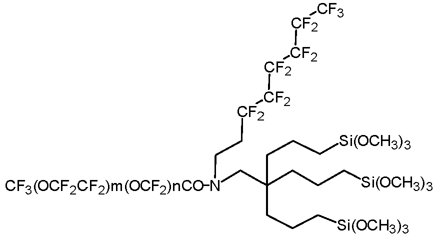

(m ≈ 21, n ≈ 35)

### (Synthetic Example 6)

A mixture (3.7 g) containing a polyether group-containing compound (F) and a polyether group-containing compound (F') was obtained in the same manner as Synthetic Examples 1 and 2 except that N-(3,3,3-trifluoropropyl)-2,2-di(2-propenyl)-4-pentylamine was used in place of N-octyl-2,2-di(2-propenyl)-4-pentylamine.

### Polyether group-containing compound (F):

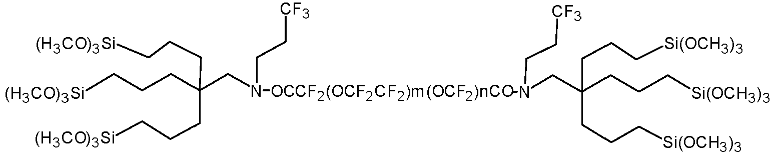

(m ≈ 21, n ≈ 35)

### Polyether group-containing compound (F'):

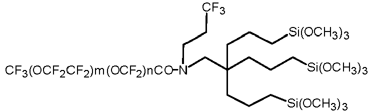

(m ≈ 21, n ≈ 35)

### (Synthetic Example 7)

A mixture (3.9 g) containing a polyether group-containing compound (G) and a polyether group-containing compound (G') was obtained in the same manner as Synthetic Examples 1 and 2 except that N-(8,8,8-trifluorooctyl)-2,2-di(2-propenyl)-4-pentylamine was used in place of N-octyl-2,2-di(2-propenyl)-4-pentylamine.

### Polyether group-containing compound (G):

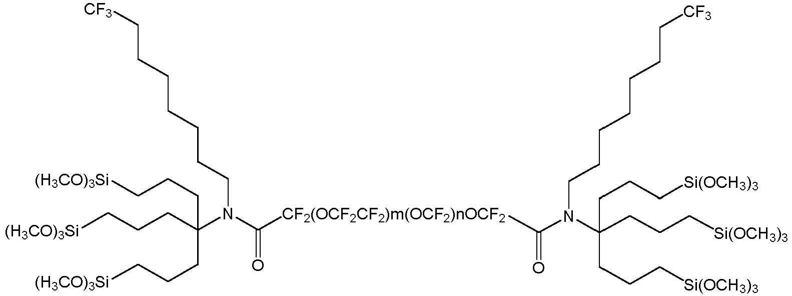

(m ≈ 21, n ≈ 35)

### Polyether group-containing compound (G'):

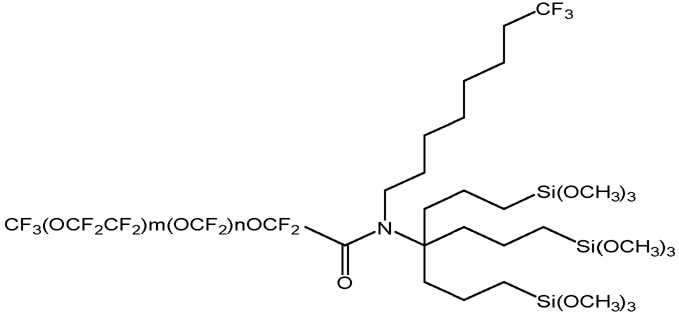

(m ≈ 21, n ≈ 35)

### (Example 1)

The mixture containing the polyether group-containing compound (B) and the polyether group-containing compound (B') obtained in Synthetic Example 2 was dissolved in hydrofluoroether (Novec HFE-7300, manufactured by 3M) so as to have a concentration of 10 mass%, and thus a surface-treating agent (1) was prepared.

### (Example 2)

The mixture containing the polyether group-containing compound (C) and the polyether group-containing compound (C') obtained in Synthetic Example 3 was dissolved in hydrofluoroether (Novec HFE-7300, manufactured by 3M) so as to have a concentration of 10 mass%, and thus a surface-treating agent (2) was prepared.

### (Example 3)

The mixture containing the polyether group-containing compound (D) and the polyether group-containing compound (D') obtained in Synthetic Example 4 was dissolved in hydrofluoroether (Novec HFE-7300, manufactured by 3M) so as to have a concentration of 10 mass%, and thus a surface-treating agent (3) was prepared.

### (Example 4)

The mixture containing the polyether group-containing compound (E) and the polyether group-containing compound (E') obtained in Synthetic Example 5 was dissolved in hydrofluoroether (Novec HFE-7500, manufactured by 3M) so as to have a concentration of 10 mass%, and thus a surface-treating agent (4) was prepared.

### (Example 5)

The mixture containing the polyether group-containing compound (F) and the polyether group-containing compound (F') obtained in Synthetic Example 6 was dissolved in hydrofluoroether (Novec HFE-7300, manufactured by 3M) so as to have a concentration of 10 mass%, and thus a surface-treating agent (5) was prepared.

### (Example 6)

The mixture containing the polyether group-containing compound (G) and the polyether group-containing compound (G') obtained in Synthetic Example 7 was dissolved in hydrofluoroether (Novec HFE-7300, manufactured by 3M) so as to have a concentration of 10 mass%, and thus a surface-treating agent (6) was prepared.

### (Comparative Examples 1 and 2)

Comparative surface-treating agents (1) and (2) were prepared in the same manner as Example 2 except that the following control compound (1) or (2) was used in place of the mixture containing the polyether group-containing compound (B) and the polyether group-containing compound (B').

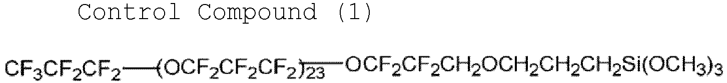

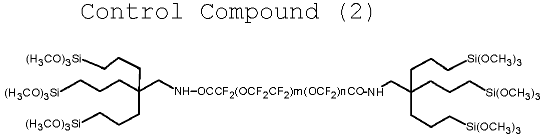

### (Static contact angle)

The static contact angle was measured by the following method using a fully automatic contact angle meter DropMaster 700 (manufactured by Kyowa Interface Science Co., Ltd.).

### <Method for measuring static contact angle>

The static contact angle was determined by dripping 2 µL of water from a microsyringe onto a horizontally placed substrate and taking a still image with a video microscope 1 second after the dripping.

### (Formation of cured film)

The surface-treating agents (1)-(6) and the comparative surface-treating agents (1)-(2) were used to form cured films as follows.

A surface-treating agent was applied to chemically tempered glass ("Gorilla" glass, manufactured by Corning Incorporated, thickness 0.7 mm) using a vacuum deposition method. The conditions of the vacuum deposition method were as follows: resistive heating deposition machine (manufactured by Shincron Co., Ltd.), chamber size 1,900 mmφ, degree of vacuum 5.0E-05, current value 240 A, voltage 10 V, and substrate temperature 40°C. The coated glass was heated at 150°C for 30 minutes in a constant-temperature vessel in air to form a cured film.

### [Evaluation of cured film properties]

Properties of the resulting cured film were evaluated as follows.

### <Static contact angle>

### (Initial evaluation)

First, as an initial evaluation, after the cured film was formed, the static water contact angle of the surface with which nothing was brought into contact yet was measured.

### (Evaluation after wiping with ethanol)

The cured film was then wiped back and forth five times with Kimwipe (trade name, manufactured by Jujo Kimberly Co., Ltd.) sufficiently soaked with ethanol, and dried. The static water contact angle of the cured film after being dried was measured.

### <Fingerprint adherability and removability by wiping>

### (Fingerprint adherability)

A finger was pressed against a cured film formed using the surface-treating agents or the comparative surface-treating agents, and how easily a fingerprint adheres was visually judged. Evaluations were made according to the following criteria:
A: Fingerprint unlikely adhered, or not noticeable even when adhered.
B: Adhered fingerprint was little, but fingerprint sufficiently confirmed.
C: Fingerprint adhered as clearly as fingerprint on untreated glass substrate.

### (Fingerprint removability by wiping)

After the above fingerprint adherability test, the adhered fingerprint was wiped off back and forth five times with Kimwipe (trade name, manufactured by Jujo Kimberly Co., Ltd.), and how easily the adhered fingerprint was wiped off was visually judged. Evaluations were made according to the following criteria:
A: Fingerprint completely wiped off.
B: Fingerprint wiping marks remained.
C: Fingerprint wiping marks spread, and difficult to remove.

The results of the series of evaluations are summarized in Table 1 below.

**[Table 1]**

| Treating agent | | Contact angle (degree) | | Fingerprint adherability and removability by wiping | |
|---|---|---|---|---|---|
| | | Initial evaluation | Ethanol After wiping | Fingerprint Adherability | Fingerprint removability by wiping |
| Surface-treating agent (1) | Example 1 | 112 | 112 | A | A |
| Surface-treating agent (2) | Example 2 | 111 | 111 | A | A |
| Surface-treating agent (3) | Example 3 | 111 | 111 | A | A |
| Surface-treating agent (4) | Example 4 | 113 | 113 | A | A |
| Surface-treating agent (5) | Example 5 | 113 | 113 | A | A |
| Surface-treating agent (6) | Example 6 | 113 | 113 | A | A |
| Comparative surface-treating agent (1) | Comparative Example 1 | 113 | 111 | A | B |
| Comparative surface-treating agent (2) | Comparative Example 2 | 110 | 110 | B | C |

The contact angles of the cured films formed using the surface-treating agents (1)-(6) were not decreased even when the films were wiped using ethanol. On the other hand, the contact angles of the cured films formed using the comparative surface-treating agent (1) were decreased when the films were wiped using ethanol. This is considered to be because the cured films formed with the comparative surface-treating agent (1) have poor chemical resistance (durability against solvents). Moreover, the cured films formed using the comparative surface-treating agent (2) received poor initial evaluations with respect to the contact angle and also poor fingerprint adherability and fingerprint removability by wiping. This is considered to be because the cured films formed with the comparative surface-treating agent (2) have poor antifouling properties.

### Evaluation of cured film friction resistance

The friction resistance of the resulting cured films was evaluated as follows.

### <Test of friction resistance against steel wool>

Using a rubbing tester (manufactured by Shinto Scientific Co., Ltd.), the water-resisting contact angle was measured every 2,500 rubs under the following conditions, and the test was continued until it reached 10,000 rubs or until the angle became less than 100°. The test environment conditions were 25°C and a humidity of 40% RH.

### Conditions

Steel wool: #0000
Abrasion area: 1 cm² (1 cm × 1 cm)
Abrasion rate: 14 cm/sec
Load: 1 kg/cm² (using a 1 kg weight)
Water: 1 µl Average of 5-point measurement

The results of the above evaluation are summarized in Table 2 below. In the table, "-" means that the measurement was not performed.

**[Table 2]**

| Treating agent | | Number of times eraser was rubbed | | | | |
|---|---|---|---|---|---|---|
| | | 0 times | 2,500 times | 5,000 times | 7,500 times | 10,000 times |
| Surface-treating agent (1) | Example 1 | 112 | 108 | 107 | 106 | 104 |
| Surface-treating agent (2) | Example 2 | 111 | 106 | 105 | 105 | 101 |
| Surface-treating agent (3) | Example 3 | 111 | 109 | 106 | 103 | 102 |
| Surface-treating agent (4) | Example 4 | 113 | 110 | 109 | 107 | 105 |
| Surface-treating agent (5) | Example 5 | 113 | 107 | 106 | 103 | 102 |
| Surface-treating agent (6) | Example 6 | 113 | 111 | 108 | 105 | 101 |
| Comparative surface-treating agent (1) | Comparative Example 1 | 113 | 104 | 97 | - | - |

From the above results, it was confirmed that the cured films formed using the surface-treating agents (1)-(6) have higher friction resistance than the cured film formed using the comparative surface-treating agent (1).

### Industrial Applicability

The present fluoropolyether group-containing compound can be suitably utilized to form a surface-treating layer on the surface of a variety of substrates, in particular optical members for which friction durability is required.

## Claims

1. A compound, which is a fluoropolyether group-containing silane compound of formula (1) or (2):
Rf¹-R^{F}-O_{q}-X^{A}-C(=O)-N(R¹)-X^{B}-R^{Si} (1)
R^{Si}-X^{B}-N(R¹)-C(=O)-X^{A}-Rf²ₚ-R^{F}-O_{q}-X^{A}-C(=O)-N(R¹)-X^{B}-R^{Si} (2)
wherein, each independently at each occurrence,
Rf¹ is C₁₋₁₆-alkyl optionally substituted with F;
Rf² is C₁₋₆-alkylene optionally substituted with F;
R^{F} is a divalent fluoropolyether group;
p is 0 or 1;
q is 0 or 1;
R¹ is C₁₋₁₆-alkyl optionally substituted with F;
R^{Si} is a monovalent group containing a Si atom to which OH or a hydrolyzable group selected from -OR^{j}, -OCOR^{j}, -O-N=CR^{j}₂, -NR^{j}₂, -NHR^{j}, and halogen (wherein R^{j} is optionally substituted C₁₋₄-alkyl) is bonded;
X^{A} is a single bond or -(X⁵¹)ₚ₅-
X⁵¹ is a group selected from -O-, -S-, an o-, m- or p-phenylene group, -C(O)O-, -OC(O)-, -Si(R⁵³)₂-, - (Si(R⁵³)₂O)ₘ₅-Si(R⁵³)₂-, -CONR⁵⁴-, -NR⁵⁴CO-, -O-CONR⁵⁴-, -NR⁵⁴CO-O-, -NR⁵⁴-, and - (CH₂)ₙ₅-,
R⁵³ is phenyl, C₁₋₆-alkyl, or C₁₋₆-alkoxy,
R⁵⁴ is H, phenyl, or C₁₋₆-alkyl,
m5 is an integer of 1-100,
n5 is an integer of 1-20, and
p5 is an integer of 1-10; and
X^{B} is a single bond or -(X⁶¹)ₚ₆-
X⁶¹ is a group selected from -O-, -S-, an o-, m- or p-phenylene group, -C(O)O-, -OC(O)-, -Si(R⁶³)₂-, - (Si(R⁶³)₂O)ₘ₆-Si(R⁶³)₂-, -CONR⁶⁴-, -NR⁶⁴CO-, -O-CONR⁶⁴-, -NR⁶⁴CO-O-, -NR⁶⁴-, and -(CH₂)ₙ₆-,
R⁶³ is phenyl, C₁₋₆-alkyl, or C₁₋₆-alkoxy,
R⁶⁴ is H, phenyl, or C₁₋₆-alkyl,
m6 is an integer of 1-100,
n6 is an integer of 1-20, and
p6 is an integer of 1-10.

2. The compound of claim 1, wherein R¹ each independently is C₃₋₁₆-alkyl optionally substituted with F.

3. The compound of claim 1 or 2, wherein R¹ each independently is unsubstituted alkyl.

4. The compound of any of claims 1-3, wherein Rf¹ each independently is C₁₋₁₆-perfluoroalkyl, and Rf² each independently is C₁₋₆-perfluoroalkylene.

5. The compound of any of claims 1-4, wherein R^{F} each independently is a group of the formula:
-(OC₆F₁₂)ₐ-(OC₅F₁₀)_{b}-(OC₄F₈)_{c}-(OC₃R^{Fa}₆)_{d}-(OC₂F₄)ₑ-(OCF₂)_{f}-
wherein R^{Fa} each independently is H, F or Cl, and a-f each independently are an integer of 0-200, with (a+b+c+d+e+f) being ≥ 1, and the order of the repeating units in parentheses provided with a, b, c, d, e, or f is not limited, provided that when all R^{Fa} groups are H or Cl, at least one of a, b, c, e, and f is ≥ 1.

6. The compound of claim 5, wherein R^{Fa} is F.

7. The compound of any of claims 1-6, wherein R^{F} each independently is a group represented of any of the formulae (f1)-(f6):
-(OC₃F₆)_{d}- (f1)
wherein d is an integer of 1-200;
-(OC₄F₈)_{c}-(OC₃F₆)_{d}-(OC₂F₄)ₑ-(OCF₂)_{f}- (f2)
wherein c and d each independently are an integer of 0-30;
e and f each independently are an integer of 1-200; and (c+d+e+f) is an integer of 10-200; and the order of the repeating units in parentheses provided with the subscript c, d, e, or f is not limited;
-(R⁶-R⁷)_{g}- (f3)
wherein
R⁶ is OCF₂ or OC₂F₄;
R⁷ is a group selected from OC₂F₄, OC₃F₆, OC₄F₈, OC₅F₁₀, and OC₆F₁₂, or is a combination of two or three groups selected from these groups; and
g is an integer of 2-100;
- (R⁶-R⁷)_{g}-R^{r}-(R⁷'-R^{6'})_{g'}- (f4)
wherein
R⁶ is OCF₂ or OC₂F₄;
R⁷ is a group selected from OC₂F₄, OC₃F₆, OC₄F₈, OC₅F₁₀, OC₆F₁₂, and combinations of 2-3 groups independently selected from these groups;
R^{6'} is OCF₂ or OC₂F₄;
R^{7'} is a group selected from OC₂F₄, OC₃F₆, OC₄F₈, OC₅F₁₀, OC₆F₁₂, and combinations of 2-3 groups independently selected from these groups;
g is an integer of 2-100;
g' is an integer of 2-100; and
R^{r} is any of the following, wherein * is a binding position: 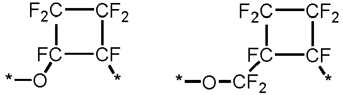 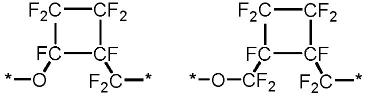 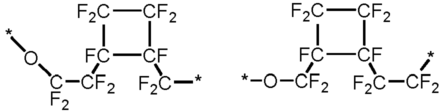 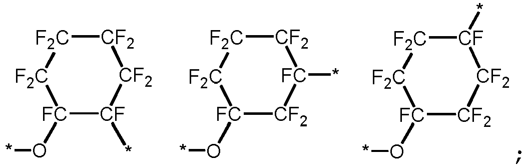
-(OC₆F₁₂)ₐ-(OC₅F₁₀)_{b}-(OC₄F₈)_{c}-(OC₃F₆)_{d}-(OC₂F₄)ₑ-(OCF₂)_{f}- (f5)
wherein a-d and f each independently are an integer of 0-200, e is an integer of 1-200, and the order of the repeating units in parentheses provided with a, b, c, d, e, or f is not limited; and
-(OC₆F₁₂)ₐ-(OC₅F₁₀)_{b}-(OC₄F₈)_{c}-(OC₃F₆)_{d}-(OC₂F₄)ₑ-(OCF₂)_{f}- (f6)
wherein a-e each independently are an integer of 0-200, f is an integer of 1-200, and the order of the repeating units in parentheses provided with a, b, c, d, e, or f is not limited.

8. The compound of any of claims 1-7, wherein R^{Si} each independently is a group of any of formulae (S1)-(S5): 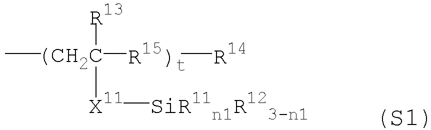
-SiR¹¹ₙ₁R¹²₃₋ₙ₁ (S2)
wherein, each independently at each occurrence,
R¹¹ is OH or a hydrolyzable group;
R¹² is H or a monovalent organic group;
n1 is an integer of 0-3 for each (SiR¹¹ₙ₁R¹²₃₋ₙ₁) unit;
X¹¹ is a single bond or a divalent organic group;
R¹³ is H or a monovalent organic group;
R¹⁴ is H, halogen, or -X¹¹-SiR¹¹ₙ₁R¹²₃₋ₙ₁;
R¹⁵ is a single bond, O, C₁₋₆-alkylene, or C₁₋₆-alkyleneoxy; and
t is an integer of ≥ 2;
-SiR^{a1}ₖ₁R^{b1}ₗ₁R^{c1}ₘ₁ (S3)
wherein, each independently at each occurrence,
R^{a1} is -Z¹-SiR²¹ₚ₁R²²_{q1}R²³ᵣ₁;
Z¹ is O or a divalent organic group;
R²¹ is -Z^{1'}-SiR^{21'}_{p1'}R^{22'}_{q1'}R^{23'}_{r1'};
Z^{1'} is O or a divalent organic group;
R^{21'} is -Z^{1"}-SiR^{22"}_{q1"}R^{23"}_{r1"};
Z^{1"} is O or a divalent organic group;
R^{22"} is OH or a hydrolyzable group;
R^{23"} is H or a monovalent organic group;
q1" is an integer of 0-3;
r1" is an integer of 0-3;
and (q1"+r1") is 3 in the SiR^{22"}_{q1"}R^{23"}_{r1"} unit;
R^{22'} is OH or a hydrolyzable group;
R^{23'} is H or a monovalent organic group;
p1' is an integer of 0-3;
q1' is an integer of 0-3;
r1' is an integer of 0-3;
and (p1'+q1'+r1') is 3 in the SiR^{21'}_{p1'}R^{22'}_{q1'}R^{23'}_{r1'} unit;
R²² is OH or a hydrolyzable group;
R²³ is H or a monovalent organic group;
p1 is an integer of 0-3;
q1 is an integer of 0-3;
r1 is an integer of 0-3;
and (p1+q1+r1) is 3 in the SiR²¹ₚ₁R²²_{q1}R²³ᵣ₁ unit;
R^{b1} is OH or a hydrolyzable group;
R^{c1} is H or a monovalent organic group;
k1 is an integer of 1-3;
l1 is an integer of 0-3;
m1 is an integer of 0-3;
and (k1+l1+m1) is 3 in the SiR^{a1}ₖ₁R^{b1}ₗ₁R^{c1}ₘ₁ unit;
-SCR^{d1}ₖ₂R^{e1}ₗ₂R^{f1}ₘ₂ (S4)
wherein, each independently at each occurrence,
R^{d1} is -Z²-CR³¹ₚ₂R³²_{q2}R³³ᵣ₂;
Z² is a single bond, O, or a divalent organic group;
R³¹ is -Z^{2'}-CR^{32'}_{q2'}R^{33'}_{r2'};
Z^{2'} is a single bond, O, or a divalent organic group;
R^{32'} is -Z³-SiR³⁴ₙ₂R³⁵₃₋ₙ₂;
R^{33'} is H, OH, or a monovalent organic group;
q2' is an integer of 0-3;
r2' is an integer of 0-3;
and (q2'+r2') is 3 in the SiR^{32'}_{q2'}R^{33'}_{r2'} unit;
R³² is -Z³-SiR³⁴ₙ₂R³⁵₃₋ₙ₂;
Z³ is a single bond, O, or a divalent organic group;
R³⁴ is OH or a hydrolyzable group;
R³⁵ is H or a monovalent organic group;
n2 is an integer of 0-3;
R³³ is H, OH, or a monovalent organic group;
p2 is an integer of 0-3;
q2 is an integer of 0-3;
r2 is an integer of 0-3;
and (p2+q2+r2) is 3 in the SiR³¹ₚ₂R³²_{q2}R³³ᵣ₂ unit;
R^{e1} is -Z³-SiR³⁴ₙ₂R³⁵₃₋ₙ₂;
R^{f1} is H, OH, or a monovalent organic group;
k2 is an integer of 0-3;
l2 is an integer of 0-3;
m2 is an integer of 0-33;
and (k2+l2+m2) is 3 in the CR^{d1}ₖ₂R^{e1}₁₂R^{f1}ₘ₂ unit;
-NR^{g1}R^{h1} (S5)
wherein, each independently at each occurrence,
R^{g1}, R^{h1} are -Z⁴-SiR¹¹ₙ₁R¹²₃₋ₙ₁, -Z⁴-SiR^{a1}ₖ₁R^{b1}ₗ₁R^{c1}ₘ₁, or -Z⁴-CR^{d1}ₖ₂R^{e1}ₗ₂R^{f1}ₘ₂; and
Z⁴ is a single bond, O, or a divalent organic group,
provided that in the formulae (S1)-(S5) at least one Si atom is present to which OH or a hydrolyzable group is bonded,
wherein the hydrolyzable group in the above formulae is each independently selected from -OR^{j}, -OCOR^{j}, -O-N=CR^{j}₂, -NR^{j}₂, -NHR^{j}, and halogen, wherein R^{j} is optionally substituted C₁₋₄-alkyl.

9. The compound of any of claims 1-8, wherein R^{Si} is a group of formula (S4).

10. The compound of any of claims 1-9, wherein
X^{A} each independently is a single bond or a group of the formula:
-(R^{51'})_{p5'}-(O)_{q5'}-(R^{51'})_{p5"}-
wherein R^{51'} each independently is C₁₋₆-alkylene, and p5', p5" andq5' each independently are 0 or 1, provided that at least one of p5' and p5" is 1; and
X^{B} each independently is a single bond or a group of the formula:
-(R^{61'})_{p6'}-(O)_{q6'}-(R^{61'})_{p6"}-
wherein R^{61'} each independently is C₁₋₆-alkylene, and p6', p6" and q6' each independently are 0 or 1, provided that at least one of p6' and p6" is 1.

11. The compound of any of claims 1-10, wherein X^{A} is a single bond, and X^{B} is C₁₋₆-alkylene.

12. A surface-treating agent comprising the compound of any of claims 1-11.

13. The surface-treating agent of claim 12, further comprising
(i) one or more components selected from a fluorine-containing oil, a silicone oil, and a catalyst; and/or
(ii) a solvent.

14. The use of the surface-treating agent of claim 12 or 13 as an antifouling coating agent or a water-proof coating agent.

15. An article, preferably an article which is an optical member, comprising a substrate and, on a surface thereof, a layer formed of the compound of any of claims 1-11 or the surface-treating agent of claims 12 or 13.

## Patentansprüche

1. Verbindung, die eine Fluorpolyethergruppen-haltige Silanverbindung der Formel (1) oder (2) ist:
Rf¹-R^{F}-O_{q}-X^{A}-C(=O)-N(R¹)-X^{B}-R^{Si} (1)
R^{Si}-X^{B}-N(R¹)-C(=O)-X^{A}-Rf²ₚ-R^{F}-O_{q}-X^{A}-C(=O)-N(R¹)-X^{B}-R^{Si} (2)
worin, jeweils unabhängig bei jedem Vorkommen,
Rf¹ C₁₋₁₆-Alkyl ist, das optional mit F substituiert ist;
Rf² C₁₋₆-Alkylen ist, das optional mit F substituiert ist;
R^{F} eine zweiwertige Fluorpolyethergruppe ist;
p 0 oder 1 ist;
q 0 oder 1 ist;
R¹ C₁₋₁₆-Alkyl ist, das optional mit F substituiert ist;
R^{Si} eine einwertige Gruppe ist, die ein Si-Atom enthält, an das OH oder eine hydrolysierbare Gruppe, ausgewählt aus -OR^{j}, -OCOR^{j}, -O-N=CR³₂, -NR^{j}₂, -NHR^{j} und Halogen (worin R^{j} optional substituiertes C₁₋₄-Alkyl ist), gebunden ist;
X^{A} eine Einfachbindung oder -(X⁵¹)ₚ₅- ist
X⁵¹ eine Gruppe ist, ausgewählt aus -O-, -S-, einer o-, m- oder p-Phenylengruppe, -C(O)O-, -OC(O)-, -Si(R⁵³)₂-, -(Si(R⁵³)₂O)ₘ₅-Si(R⁵³)₂-, -CONR⁵⁴-, -NR⁵⁴CO-, -O-CONR⁵⁴-, -NR⁵⁴CO-O-, -NR⁵⁴- und -(CH₂)ₙ₅-,
R⁵³ Phenyl, C₁₋₆-Alkyl oder C₁₋₆-Alkoxy ist,
R⁵⁴ H, Phenyl oder C₁₋₆-Alkyl ist,
m5 eine ganze Zahl von 1-100 ist,
n5 eine ganze Zahl von 1-20 ist, und
p5 eine ganze Zahl von 1-10 ist; und
X^{B} eine Einfachbindung oder -(X⁶¹)ₚ₆- ist
X⁶¹ eine Gruppe ist, ausgewählt aus -O-, -S-, einer o-, m- oder p-Phenylengruppe, -C(O)O-, -OC(O)-, -Si(R⁶³)₂-, -(Si(R⁶³)₂O)ₘ₆-Si(R⁶³)₂-, -CONR⁶⁴-, -NR⁶⁴CO-, -O-CONR⁶⁴-, -NR⁶⁴CO-O-, -NR⁶⁴- und -(CH₂)ₙ₆-,
R⁶³ Phenyl, C₁₋₆-Alkyl oder C₁₋₆-Alkoxy ist,
R⁶⁴ H, Phenyl oder C₁₋₆-Alkyl ist,
m6 eine ganze Zahl von 1-100 ist,
n6 eine ganze Zahl von 1-20 ist, und
p6 eine ganze Zahl von 1-10 ist.

2. Verbindung nach Anspruch 1, wobei R¹ jeweils unabhängig C₃₋₁₆-Alkyl ist, das optional mit F substituiert ist.

3. Verbindung nach Anspruch 1 oder 2, wobei R¹ jeweils unabhängig unsubstituiertes Alkyl ist.

4. Verbindung nach mindestens einem der Ansprüche 1-3, wobei Rf¹ jeweils unabhängig C₁₋₁₆-Perfluoralkyl ist und Rf² jeweils unabhängig C₁₋₆-Perfluoralkylen ist.

5. Verbindung nach mindestens einem der Ansprüche 1-4, wobei R^{F} jeweils unabhängig eine Gruppe der folgenden Formel ist:
-(OC₆F₁₂)ₐ-(OC₅F₁₀)_{b}-(OC₄F₈)_{c}-(OC₃R^{Fa}₆)_{d}-(OC₂F₄)ₑ-(OCF₂)_{f}-
worin R^{Fa} jeweils unabhängig H, F oder Cl ist und a-f jeweils unabhängig eine ganze Zahl von 0-200 sind, wobei (a+b+c+d+e+f) ≥ 1 ist, und die Reihenfolge der mit a, b, c, d, e oder f versehenen Wiederholungseinheiten in Klammern nicht beschränkt ist, mit der Maßgabe, dass, wenn alle R^{Fa}-Gruppen H oder Cl sind, mindestens eines von a, b, c, e und f ≥ 1 ist.

6. Verbindung nach Anspruch 5, wobei R^{Fa} F ist.

7. Verbindung nach mindestens einem der Ansprüche 1-6, wobei R^{F} jeweils unabhängig eine Gruppe ist, die durch eine beliebige der Formeln (f1)-(f6) dargestellt wird:
-(OC₃F₆)_{d}- (f1)
worin d eine ganze Zahl von 1-200 ist;
-(OC₄F₈)_{c}-(OC₃F₆)_{d}-(OC₂F₄)ₑ-(OCF₂)_{f}- (f2)
worin c und d jeweils unabhängig eine ganze Zahl von 0-30 sind; e und f jeweils unabhängig eine ganze Zahl von 1-200 sind; und (c+d+e+f) eine ganze Zahl von 10-200 ist; und die Reihenfolge der mit den Indizes c, d, e oder f versehenen Wiederholungseinheiten in Klammern nicht beschränkt ist;
-(R⁶-R⁷)_{g}- (f3)
worin
R⁶ OCF₂ oder OC₂F₄ ist;
R⁷ eine Gruppe ist, ausgewählt aus OC₂F₄, OC₃F₆, OC₄F₈, OC₅F₁₀ und OC₆F₁₂, oder eine Kombination aus zwei oder drei Gruppen, ausgewählt aus diesen Gruppen; und
g eine ganze Zahl von 2-100 ist;
- (R⁶-R⁷)_{g}-R^{r}-(R^{7'}-R^{6'})_{g'}- (f4)
worin
R⁶ OCF₂ oder OC₂F₄ ist;
R⁷ eine Gruppe ist, ausgewählt aus OC₂F₄, OC₃F₆, OC₄F₈, OC₅F₁₀, OC₆F₁₂ und Kombinationen aus 2-3, die unabhängig aus diesen Gruppen ausgewählt sind;
R^{6'} OCF₂ oder OC₂F₄ ist;
R^{7'} eine Gruppe ist, ausgewählt aus OC₂F₄, OC₃F₆, OC₄F₈, OC₅F₁₀, OC₆F₁₂ und Kombinationen aus 2-3, die unabhängig aus diesen Gruppen ausgewählt sind;
g eine ganze Zahl von 2-100 ist;
g' eine ganze Zahl von 2-100 ist; und
R^{r} eine beliebige der folgenden Gruppen ist, wobei * eine Bindungsposition ist: 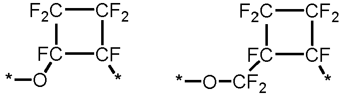 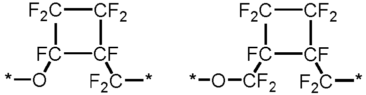 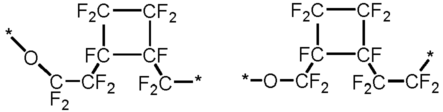 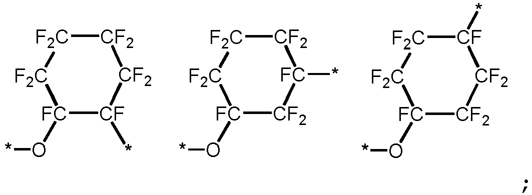 -(OC₆F₁₂)ₐ-(OC₅F₁₀)_{b}-(OC₄F₈)_{c}-(OC₃F₆)_{d}-(OC₂F₄)ₑ-(OCF₂)_{f}- (f5)
worin a-d und f jeweils unabhängig eine ganze Zahl von 0-200 sind, e eine ganze Zahl von 1-200 ist, und die Reihenfolge der mit a, b, c, d, e oder f versehenen Wiederholungseinheiten in Klammern nicht beschränkt ist; und
-(OC₆F₁₂)ₐ-(OC₅F₁₀)_{b}-(OC₄F₈)_{c}-(OC₃F₆)_{d}-(OC₂F₄)ₑ-(OCF₂)_{f}- (f6)
worin a-e jeweils unabhängig eine ganze Zahl von 0-200 sind, f eine ganze Zahl von 1-200 ist, und die Reihenfolge der mit a, b, c, d, e oder f versehenen Wiederholungseinheiten in Klammern nicht beschränkt ist.

8. Verbindung nach mindestens einem der Ansprüche 1-7, wobei R^{Si} jeweils unabhängig eine Gruppe mit einer beliebigen der Formeln (S1)-(S5) ist: 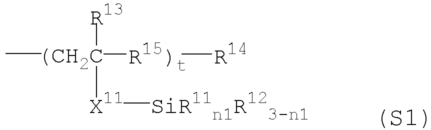
-SiR¹¹ₙ₁R¹²₃₋ₙ₁ (S2)
worin, jeweils unabhängig bei jedem Vorkommen,
R¹¹ OH oder eine hydrolysierbare Gruppe ist;
R¹² H oder eine einwertige organische Gruppe ist;
n1 eine ganze Zahl von 0-3 für jede (SiR¹¹ₙ₁R¹²₃₋ₙ₁)-Einheit ist;
X¹¹ eine Einfachbindung oder eine zweiwertige organische Gruppe ist;
R¹³ H oder eine einwertige organische Gruppe ist;
R¹⁴ H, Halogen oder -X¹¹-SiR¹¹ₙ₁R¹²₃₋ₙ₁ ist;
R¹⁵ eine Einfachbindung, O, C₁₋₆-Alkylen oder C₁₋₆-Alkylenoxy ist; und
t eine ganze Zahl von ≥ 2 ist;
-SiR^{a1}ₖ₁R^{b1}ₗ₁R^{c1}ₘ₁ (S3)
worin, jeweils unabhängig bei jedem Vorkommen,
R^{a1} -Z¹-SiR²¹ₚ₁R²²_{q1}R²³ᵣ₁ ist;
Z¹ O oder eine zweiwertige organische Gruppe ist;
R²¹ -Z^{1'}-SiR^{21'}ₚ₁R^{22'}_{q1'}R^{23'}_{r1'} ist;
Z^{1'} O oder eine zweiwertige organische Gruppe ist;
R^{21'} -Z^{1"}-SiR^{22"}_{q1"}R^{23"}_{r1"} ist;
Z^{1"} O oder eine zweiwertige organische Gruppe ist;
R^{22"} OH oder eine hydrolysierbare Gruppe ist;
R^{23"} H oder eine einwertige organische Gruppe ist;
q1" eine ganze Zahl von 0-3 ist;
r1" eine ganze Zahl von 0-3 ist;
und (q1"+r1") 3 in der SiR^{22"}_{q1"}R^{23"}_{r1"} Einheit ist;
R^{22'} OH oder eine hydrolysierbare Gruppe ist;
R^{23'} H oder eine einwertige organische Gruppe ist;
p1' eine ganze Zahl von 0-3 ist;
q1' eine ganze Zahl von 0-3 ist;
r1' eine ganze Zahl von 0-3 ist;
und (p1'+q1'+r1') 3 in der SiR^{21'}_{p1'}R^{22'}_{q1'}R^{23'}_{r1'} Einheit ist;
R²² OH oder eine hydrolysierbare Gruppe ist;
R²³ H oder eine einwertige organische Gruppe ist;
p1 eine ganze Zahl von 0-3 ist;
q1 eine ganze Zahl von 0-3 ist;
r1 eine ganze Zahl von 0-3 ist;
und (p1+q1+r1) 3 in der SiR²¹ₚ₁R²²_{q1}R²³ᵣ₁ Einheit ist;
R^{b1} OH oder eine hydrolysierbare Gruppe ist;
R^{c1} H oder eine einwertige organische Gruppe ist;
k1 eine ganze Zahl von 1-3 ist;
l1 eine ganze Zahl von 0-3 ist;
m1 eine ganze Zahl von 0-3 ist;
und (k1+l1+m1) 3 in der SiR^{a1}ₖ₁R^{b1}ₗ₁R^{c1}ₘ₁ Einheit ist;
-SCR^{d1}ₖ₂R^{e1}ₗ₂R^{f1}ₘ₂ (S4)
worin, jeweils unabhängig bei jedem Vorkommen,
R^{d1} -Z²-CR³¹ₚ₂R³²_{q2}R³³ᵣ₂ ist;
Z² eine Einfachbindung, O oder eine zweiwertige organische Gruppe ist;
R³¹ -Z^{2'}-CR^{32'}_{q2'}R^{33'}_{r2'} ist;
Z^{2'} eine Einfachbindung, O oder eine zweiwertige organische Gruppe ist;
R^{32'} -Z³-SiR³⁴ₙ₂R³⁵₃₋ₙ₂ ist;
R^{33'} H, OH oder eine einwertige organische Gruppe ist;
q2' eine ganze Zahl von 0-3 ist;
r2' eine ganze Zahl von 0-3 ist;
und (q2'+r2') 3 in der SiR^{32'}_{q2'}R^{33'}_{r2'} Einheit ist;
R³² -Z³-SiR³⁴ₙ₂R³⁵₃₋ₙ₂ ist;
Z³ eine Einfachbindung, O oder eine zweiwertige organische Gruppe ist;
R³⁴ OH oder eine hydrolysierbare Gruppe ist;
R³⁵ H oder eine einwertige organische Gruppe ist;
n2 eine ganze Zahl von 0-3 ist;
R³³ H, OH oder eine einwertige organische Gruppe ist;
p2 eine ganze Zahl von 0-3 ist;
q2 eine ganze Zahl von 0-3 ist;
r2 eine ganze Zahl von 0-3 ist;
und (p2+q2+r2) 3 in der SiR³¹ₚ₂R³²_{q2}R³³ᵣ₂ Einheit ist;
R^{e1} -Z³-SiR³⁴ₙ₂R³⁵₃₋ₙ₂ ist;
R^{f1} H, OH oder eine einwertige organische Gruppe ist;
k2 eine ganze Zahl von 0-3 ist;
l2 eine ganze Zahl von 0-3 ist;
m2 eine ganze Zahl von 0-3 ist;
und (k2+l2+m2) 3 in der CR^{d1}ₖ₂R^{e1}ₗ₂R^{f1}ₘ₂ Einheit ist;
-NR^{g1}R^{h1} (S5)
worin, jeweils unabhängig bei jedem Vorkommen,
R^{g1}, R^{h1} -Z⁴-SiR¹¹ₙ₁R¹²₃₋ₙ₁, -Z⁴-SiR^{a1}ₖ₁R^{b1}₁₁R^{c1}ₘ₁, oder -Z⁴-CR^{d1}ₖ₂R^{e1}ₗ₂R^{f1}ₘ₂ sind; und
Z⁴ eine Einfachbindung, O oder eine zweiwertige organische Gruppe ist,
mit der Maßgabe, dass in den Formeln (S1)-(S5) mindestens ein Si-Atom vorhanden ist, an das OH oder eine hydrolysierbare Gruppe gebunden ist,
wobei die hydrolysierbare Gruppe in den obigen Formeln jeweils unabhängig aus -OR^{j}, -OCOR^{j}, -O-N=CR₂, -NR^{j}₂, -NHR^{j} und Halogen ausgewählt ist, wobei R^{j} optional substituiertes C₁₋₄-Alkyl ist.

9. Verbindung nach mindestens einem der Ansprüche 1-8, wobei R^{Si} eine Gruppe der Formel (S4) ist.

10. Verbindung nach mindestens einem der Ansprüche 1-9, wobei
X^{A} jeweils unabhängig eine Einfachbindung oder eine Gruppe der folgenden Formel ist:
-(R^{51'})_{p5'}-(O)_{q5'}-(R^{51'})_{p5"}-
worin R^{51'} jeweils unabhängig C₁₋₆-Alkylen ist und p5', p5" und q5' jeweils unabhängig 0 oder 1 sind, mit der Maßgabe, dass mindestens eines aus p5' und p5" 1 ist; und
X^{B} jeweils unabhängig eine Einfachbindung oder eine Gruppe der folgenden Formel ist:
- (R^{61'})_{p6'}-(O)_{q6'}-(R^{61'})_{p6"}-
worin R61' jeweils unabhängig C₁₋₆-Alkylen ist und p6', p6" und q6' jeweils unabhängig 0 oder 1 sind, mit der Maßgabe, dass mindestens eines aus p6' und p6" 1 ist.

11. Verbindung nach mindestens einem der Ansprüche 1-10, wobei X^{A} eine Einfachbindung ist und X^{B} C₁₋₆-Alkylen ist.

12. Oberflächenbehandlungsmittel, umfassend die Verbindung nach mindestens einem der Ansprüche 1-11.

13. Oberflächenbehandlungsmittel nach Anspruch 12, ferner umfassend
(i) eine oder mehrere Komponenten, ausgewählt aus einem fluorhaltigen Öl, einem Silikonöl und einem Katalysator; und/oder
(ii) ein Lösungsmittel.

14. Verwendung des Oberflächenbehandlungsmittels nach Anspruch 12 oder 13 als Antifouling-Beschichtungsmittel oder wasserabweisendes Beschichtungsmittel.

15. Artikel, vorzugsweise ein Artikel, der ein optisches Element ist, umfassend ein Substrat und auf dessen Oberfläche eine Schicht, die aus der Verbindung nach mindestens einem der Ansprüche 1-11 oder dem Oberflächenbehandlungsmittel nach den Ansprüchen 12 oder 13 gebildet ist.

## Revendications

1. Un composé qui est un composé silane contenant un groupe fluoropolyéther de formule (1) ou (2) :
Rf¹-R^{F}-O_{q}-X^{A}-C(=O) -N(R¹)-X^{B}-R^{Si} (1)
R^{Si}-X^{B}-N(R¹)-C(=O) -X^{A}-Rf²ₚ-R^{F}-O_{q}-X^{A}-C(=O) -N(R¹)-X^{B}-R^{Si} (2)
dans lesquelles, indépendamment à chaque occurrence,
Rf¹ est C₁₋₁₆-alkyle optionnellement substitué par F ;
Rf² est C₁₋₆-alkylène optionnellement substitué par F ;
R^{F} est un groupe fluoropolyéther divalent ;
p est 0 ou 1 ;
q est 0 ou 1 ;
R¹ est C₁₋₁₆-alkyle optionnellement substitué par F ;
R^{Si} est un groupe monovalent contenant un atome de Si auquel OH ou un groupe hydrolysable choisi parmi -OR^{j}, - OCOR^{j}, -O-N=CR^{j}₂, -NR^{j}₂, -NHR^{j}, et halogène (dans lequel R^{j} est C₁₋₄-alkyle optionnellement substitué) est lié ;
X^{A} est une liaison simple ou -(X⁵¹)ₚ₅-
X⁵¹ est un groupe choisi parmi -O-, -S-, un groupe o-, m- ou p-phénylène, -C(O)O-, -OC(O)-, -Si(R⁵³)₂-, -(Si(R⁵³)₂O)ₘ₅-Si(R⁵³)₂-, -CONR⁵⁴-, -NR⁵⁴CO-, -O-CONR⁵⁴-, -NR⁵⁴CO-O-, -NR⁵⁴-, et -(CH₂)ₙ₅-,
R⁵³ est phényle, C₁₋₆-alkyle, ou C₁₋₆-alkoxy,
R⁵⁴ est H, phényle, ou C₁₋₆-alkyle,
m5 est un entier de 1-100,
n5 est un entier de 1-20, et
p5 est un entier de 1-10 ; et
X^{B} est une liaison simple ou -(X⁶¹)ₚ₆-
X⁶¹ est un groupe choisi parmi -O-, -S-, un groupe o-, m- ou p-phénylène, -C(O)O-, -OC(O)-, -Si(R⁶³)₂-, -(Si(R⁶³)₂O)ₘ₆-Si(R⁶³)₂-, -CONR⁶⁴-, -NR⁶⁴CO-, -O-CONR⁶⁴-, -NR⁶⁴CO-O-, -NR⁶⁴-, et -(CH₂)ₙ₆-,
R⁶³ est phényle, C₁₋₆-alkyle, ou C₁₋₆-alkoxy,
R⁶⁴ est H, phényle, ou C₁₋₆-alkyle,
m6 est un entier de 1-100,
n6 est un entier de 1-20, et
p6 est un entier de 1-10.

2. Le composé de la revendication 1, dans lequel chaque R¹ est indépendamment C₃₋₁₆-alkyls optionnellement substitué avec F.

3. Le composé de la revendication 1 ou 2, dans lequel chaque R¹ est indépendamment est alkyle non substitué.

4. Le composé de l'une quelconque des revendications 1-3, dans lequel chaque R^{f1} est indépendamment C₁₋₁₆-perfluoroalkyle, et chaque Rf² est indépendamment est C₁₋₆-perfluoroalkylène.

5. Le composé de l'une quelconque des revendications 1-4, dans lequel chaque R^{F} est indépendamment un groupe de la formule :
- (OC₆F₁₂)ₐ-(OC₅F₁₀)_{b}-(OC₄F₈)_{c}-(OC₃R^{Fa}₆)_{d}-(OC₂F₄)ₑ-(OCF₂)_{f}-
dans laquelle chaque R^{Fa} est indépendamment H, F ou Cl, et chaque a-f sont indépendamment un entier de 0-200, avec (a+b+c+d+e+f) étant ≥ 1, et l'ordre des unités de répétition dans les parenthèses fournies avec a, b, c, d, e, ou f n'est pas limité, à condition que lorsque tous les groupes R^{Fa} sont H ou Cl, au moins l'un de a, b, c, e, et f soit ≥ 1.

6. Le composé de la revendication 5, dans lequel R^{Fa} est F.

7. Le composé de l'une quelconque des revendications 1-6, dans lequel chaque R^{F} est indépendamment un groupe représenté par l'une quelconque des formules (f1)-(f6) :
-(OC₃F₆)_{d}- (f1)
dans laquelle d est un entier de 1-200 ;
-(OC₄F₈)_{c}-(OC₃F₆)_{d}-(OC₂F₄)ₑ-(OCF₂)_{f}- (f2)
dans laquelle c et d sont chacun indépendamment un entier de 0-30 ;
e et f sont chacun indépendamment un entier de 1-200 ; et (c+d+e+f) est un entier de 10-200 ; et l'ordre des unités de répétition dans les parenthèses fournies avec l'indice c, d, e, ou f n'est pas limité ;
-(R⁶-R⁷)_{g}- (f3)
dans laquelle
R⁶ est OCF₂ ou OC₂F₄ ;
R⁷ est un groupe choisi parmi OC₂F₄, OC₃F₆, OC₄F₈, OC₅F₁₀, et OC₆F₁₂, ou est une combinaison de deux ou trois groupes choisis parmi ces groupes ; et
g est un entier de 2-100 ;
- (R⁶-R⁷)_{g}-R^{r}-(R^{7'}-R^{6'})_{g'}- (f4)
dans laquelle
R⁶ est OCF₂ ou OC₂F₄ ;
R⁷ est un groupe choisi parmi OC₂F₄, OC₃F₆, OC₄F₈, OC₅F₁₀, OC₆F₁₂, et des combinaison de 2-3 groupes indépendamment choisis parmi ces groupes ;
R^{6'} est OCF₂ ou OC₂F₄ ;
R7' est un groupe choisi parmi OC₂F₄, OC₃F₆, OC₄F₈, OC₅F₁₀, OC₆F₁₂, et des combinaisons de 2-3 groupes indépendamment choisis parmi ces groupes ;
g est un entier de 2-100 ;
g' est un entier de 2-100 ; et
R^{r} est l'un quelconque des suivants, dans lesquels * est une position de liaison : 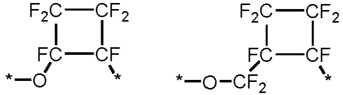 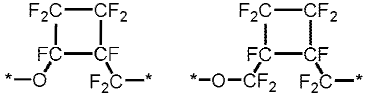 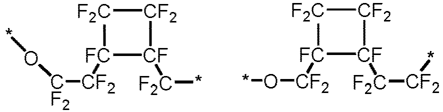 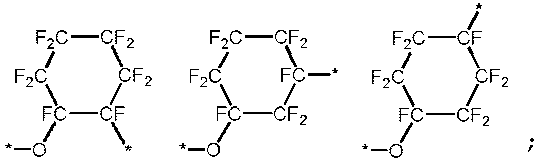
-(OC₆F₁₂)ₐ-(OC₅F₁₀)_{b}-(OC₄F₈)_{c}-(OC₃F₆)_{d}-(OC₂F₄)ₑ-(OCF₂)_{f}- (f5)
dans laquelle a-d et f sont chacun indépendamment un entier de 0-200, e est un entier de 1-200, et l'ordre des unités de répétition dans les parenthèses fournies avec a, b, c, d, e, ou f n'est pas limité ; et
-(OC₆F₁₂)ₐ-(OC₅F₁₀)_{b}-(OC₄F₈)_{c}-(OC₃F₆)_{d}-(OC₂F₄)ₑ-(OCF₂)_{f}- (f6)
dans laquelle a-e sont chacun indépendamment un entier de 0-200, f est un entier de 1-200, et l'ordre des unités de répétition dans les parenthèses fournies avec a, b, c, d, e, ou f n'est pas limité.

8. Le composé de l'une quelconque des revendications 1-7, dans lequel chaque R^{Si} est indépendamment un groupe de l'une quelconque des formules (S1)-(S5) : 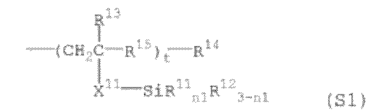
-SiR¹¹ₙ₁R¹²₃₋ₙ₁ (S2)
dans lesquelles, chacun indépendamment à chaque occurrence,
R¹¹ est OH ou un groupe hydrolysable ;
R¹² est H ou un groupe organique monovalent ;
n1 est un entier de 0-3 pour chaque unité (SiR¹¹ₙ₁R¹²₃₋ₙ₁) ;
X¹¹ est une liaison simple ou un groupe organique divalent ;
R¹³ est H ou un groupe organique monovalent ;
R¹⁴ est H, halogène, ou -X¹¹-SiR¹¹ₙ₁R¹²₃₋ₙ₁ ;
R¹⁵ est une liaison simple, O, C₁₋₆-alkylène, ou C₁₋₆-alkylèneoxy ; et
t est un entier de ≥ 2 ;
-SiR^{a1}ₖ₁R^{b1}₁₁R^{c1}ₘ₁ (S3)
dans laquelle, chacun indépendamment à chaque occurrence,
R^{a1} est -Z¹-SiR²¹ₚ₁R²²_{q1}R²³ᵣ₁ ;
Z¹ est O ou un groupe organique divalent ;
R²¹ est -Z^{1'}-SiR^{21'}_{p1'}R^{22'}_{q1'}R^{23'}_{r1'} ;
Z^{1'} est O ou un groupe organique divalent ;
R^{21'} est -Z^{1"}-SiR^{22"}_{q1"}R^{23"}_{r1"} ;
Z^{1"} est O ou un groupe organique divalent ;
R^{22"} est OH ou un groupe organique hydrolysable ;
R^{23"} est H ou un groupe organique monovalent ;
q1" est un entier de 0-3;
r1" est un entier de 0-3;
et (q1"+r1") est 3 dans l'unité SiR^{22"}_{q1"}R^{23"}_{r1"} ;
R^{22'} est OH ou un groupe organique hydrolysable ;
R^{23'} est H ou un groupe organique monovalent ;
p1' est un entier de 0-3;
q1' est un entier de 0-3;
r1' est un entier de 0-3;
et (p1'+q1'+r1') est 3 dans l'unité SiR^{21'}ₚ₁R^{22'}_{q1'}R^{23'}_{r1'} ;
R²² est OH ou un groupe organique hydrolysable ;
R²³ est H ou un groupe organique monovalent ;
p1 est un entier de 0-3 ;
q1 est un entier de 0-3 ;
r1 est un entier de 0-3 ;
et (p1+q1+r1) est 3 dans l'unité SiR²¹ₚ₁R²²_{q1}R²³ᵣ₁ ;
R^{b1} est OH ou un groupe organique hydrolysable ;
R^{c1} est H ou un groupe organique monovalent ;
k1 est un entier de 1-3;
l1 est un entier de 0-3;
m1 est un entier de 0-3;
et (k1+l1+m1) est 3 dans l'unité SiR^{a1}ₖ₁R^{b1}ₗ₁R^{c1}ₘ₁ ;
-SCR^{d1}ₖ₂R^{e1}ₗ₂R^{f1}ₘ₂ (S4)
dans laquelle, chacun indépendamment à chaque occurrence,
R^{d1} est -Z²-CR³¹ₚ₂R³²_{q2}R³³ᵣ₂ ;
Z² est une liaison simple, O, ou un groupe organique divalent ;
R³¹ est -Z^{2'}-CR^{32'}_{q2'}R^{33'}_{r2'} ;
Z^{2'} est une liaison simple, O, ou un groupe organique divalent ;
R^{32'} est -Z³-SiR³⁴ₙ₂R³⁵₃₋ₙ₂ ;
R^{33'} est H, OH, ou un groupe organique monovalent ;
q2' est un entier de 0-3;
r2' est un entier de 0-3;
et (q2'+r2') est 3 dans l'unité SiR^{32'}_{q2'}R^{33'}_{r2'} ;
R³² est -Z³-SiR³⁴ₙ₂R³⁵₃₋ₙ₂ ;
Z³ est une liaison simple, O, ou un groupe organique divalent ;
R³⁴ est OH ou un groupe organique hydrolysable ;
R³⁵ est H ou un groupe organique monovalent ;
n2 est un entier de 0-3;
R³³ est H, OH, ou un groupe organique monovalent ;
p2 est un entier de 0-3;
q2 est un entier de 0-3;
r2 est un entier de 0-3;
et (p2+q2+r2) est 3 dans l'unité SiR³¹ₚ₂R³²_{q2}R³³ᵣ₂ ;
R^{e1} est -Z³-SiR³⁴ₙ₂R³⁵₃₋ₙ₂ ;
R^{f1} est H, OH, ou un groupe organique monovalent ;
k2 est un entier de 0-3;
l2 est un entier de 0-3;
m2 est un entier de 0-33;
et (k2+l2+m2) est 3 dans l'unité CR^{d1}ₖ₂R^{e1}ₗ₂R^{f1}ₘ₂ ;
-NR^{g1}R^{h1} (S5)
dans laquelle, chacun indépendamment à chaque occurrence, R^{g1}, R^{h1} sont -Z⁴-SiR¹¹ₙ₁R¹²₃₋ₙ₁, -Z⁴-SiR^{a1}ₖ₁R^{b1}ₗ₁R^{c1}ₘ₁, ou
-Z⁴-CR^{d1}ₖ₂R^{e1}ₗ₂R^{f1}ₘ₂ ;
et
Z⁴ est une liaison simple, O, ou un groupe organique divalent,
à condition que dans les formules (S1)-(S5) au moins un atome de Si soit présent auquel OH ou un groupe hydrolysable est lié,
dans laquelle le groupe hydrolysable dans les formules ci-dessus est chacun indépendamment choisi parmi -OR^{j}, - OCOR^{j}, -O-N=CR^{j}₂, -NR^{j}₂, -NHR^{j}, et halogène, dans laquelle R^{j} est optionnellement substitué par C₁₋₄-alkyle.

9. Le composé de l'une quelconque des revendications 1-8, dans lequel R^{Si} est un groupe de formule (S4).

10. Le composé de l'une quelconque des revendications 1-9, dans lequel
X^{A} est chacun indépendamment une liaison simple ou un groupe de la formule :
-(R^{51'})_{p5'}-(O)_{q5'}-(R^{51'})_{p5"}-
dans laquelle R^{51'} est chacun indépendamment C₁₋₆-alkylène, et p5', p5" et q5' sont chacun indépendamment 0 ou 1, à condition que au moins l'un de p5' et p5" soit 1 ; et
X^{B} est chacun indépendamment une liaison simple ou un groupe de la formule :
- (R^{61'})_{p6'}-(O)_{q6'}-(R^{61'})_{p6"}-
dans laquelle R^{61'} est chacun indépendamment C₁₋₆-alkylène, et p6', p6" et q6' sont chacun indépendamment 0 ou 1, à condition que au moins l'un de p6' et p6" soit 1.

11. Le composé de l'une quelconque des revendications 1-10, dans lequel X^{A} est une liaison simple, et X^{B} est C₁₋₆-alkylène.

12. A surface-treating agent comprising the compound of any of claims 1-11.

13. L'agent de traitement de surface de la revendication 12, comprenant en outre
(i) un ou plusieurs composants choisis parmi une huile contenant du fluor, une huile silicone, et un catalyseur ; et/ou
(ii) un solvant.

14. L'utilisation de l'agent de traitement de surface de la revendication 12 ou 13 en tant qu'agent de revêtement antisalissure ou agent de revêtement imperméable.

15. Un article, préférablement un article qui est un élément optique, comprenant un substrat et, sur une surface de celui-ci, une couche formée du composé de l'une quelconque des revendications 1 à 11 ou de l'agent de traitement de surface des revendications 12 ou 13.
